# EUROPÄISCHE PATENTSCHRIFT

(11) **EP 3 504 040 B1**
(45) Veröffentlichungstag und Bekanntmachung des Hinweises auf die Patenterteilung: **16.11.2022**
(21) Anmeldenummer: 17790682.3
(22) Anmeldetag: 28.08.2017
(51) Int. Cl.: B29C 45/16, B43K 19/16

(54) **STIFT MIT EINSTÜCKIG SPRITZGEGOSSENER SCHICHTHÜLSE**
PENCIL COMPRISING AN INTEGRALLY INJECTION-MOULDED LAYERED CASING
CRAYON À GAINE MULTICOUCHE MOULÉE D'UN SEUL TENANT PAR INJECTION

(30) Priorität: 26.08.2016 DE 102016115870
(43) Veröffentlichungstag der Anmeldung: 03.07.2019
(73) Patentinhaber: A.W. Faber-Castell Cosmetics GmbH, 90546 Stein (DE)
(72) Erfinder: KAUL, Wolfgang, 91560 Heilsbronn (DE); ZECH, Christina, 91792 Ellingen (DE)
(74) Vertreter: Misselhorn, Hein-Martin
(86) Internationale Anmeldenummer: PCT/EP2017/070507
(87) Internationale Veröffentlichungsnummer: WO 2018/036847

(56) Entgegenhaltungen:
- DE-A1- 10 106 834
- JP-A- H06 255 294

## Beschreibung

Die Erfindung betrifft nach dem Oberbegriff des jeweiligen Hauptanspruchs einen anspitzbaren Stift, insbesondere einen Kosmetikstift, und ein Verfahren zu dessen Herstellung.

### STAND DER TECHNIK

Weit verbreitet sind Kosmetikstifte, bei denen die Mine von einer hölzernen Stifthülse aufgenommen wird. Die hölzernen Stifthülsen lassen sich gut mithilfe eines Spitzers von Hand anspitzen und Nachspitzen, der nach dem Prinzip des Bleistiftspitzers arbeitet.

Die Fertigung hölzerner Stifthülsen ist aber von Haus aus recht aufwendig. Dazu müssen Holzbrettchen in Form gebracht, verleimt und dann durch Fräsen vereinzelt werden.

Dort, wo solche Stifte nicht als Bleistifte oder Buntstifte, sondern als Kosmetikstifte gefertigt werden müssen, treten weitere spezifische Probleme auf.

Kosmetikstifte erfordern üblicherweise eine höhere Holzqualität als Buntstifte. Dies deshalb, weil Kosmetikstifte im Regelfall ein gleichmäßigeres Spitzbild aufweisen sollen. Zudem benötigen Kosmetikstifte ein mehr oder minder aufwändiges Oberflächenfinish. Die einzelnen Stifte werden üblicherweise einfach oder mehrfach lackiert oder beschichtet. Denn gerade die im Vergleich zu einem einzelnen Buntstift hochpreisigen Kosmetikstifte sollen den Käufern optisch und haptisch eine besondere Hochwertigkeit vermitteln.

Ein typisches, im Hinblick auf die Minenmasse als solche, unkritisches Verfahren zur Herstellung solcher Stifte besteht darin, eine geeignete Minenmasse zu extrudieren und in genutete Brettchen einzukleben oder in Kunststoffhülsen einzuschieben. Dieses Verfahren entspricht dem Verfahren, das sich zur Herstellung von Buntstiften bewährt hat. Nachteilig bei diesen Extrusions-Verfahren ist, dass im Regelfall nur Minenmassen einsetzbar sind, die zu relativ harten Minen führen. Denn die Minen müssen bei der weiteren Verarbeitung handhabbar bleiben - zu weiche Minen drohen sich zu verformen, wenn sie in die anschließend zusammenzuleimenden Brettchen eingelegt werden. Harte Minen sind allerdings gerade bei Kosmetikstiften oft unerwünscht, da sie eine sogenannte härtere Applikation zeigen, indem sich von ihnen nur unter relativ hohem Druck eine zufriedenstellende Menge an Kosmetikum abziehen lässt.

Aufgrund dessen wird im Bereich der Kosmetikstift-Produktion häufig ein anderes Verfahren zur Herstellung der Mine eingesetzt. Bei diesem Verfahren wird die kosmetische Masse heiß in vorgefertigte Schafthülsen mit einem konzentrischen Loch eingegossen, wo die Minenmasse erkaltet. Hierbei stellt sich aber nun das Problem dar, dass Kosmetikmassen einen relativ hohen Anteil (im heißen Zustand) flüchtiger Bestandteile aufweisen können. Diese flüchtigen Bestandteile neigen, zumindest im Laufe der Zeit dazu, auch im erkalteten Zustand, zu diffundieren oder zu migrieren.

Bei Kosmetikstiften mit solchen weichen Minen bedarf daher auch die Innenoberfläche der hölzernen Stifthülse, welche die Mine aufnimmt, einer gesonderten Vorbehandlung - wenn überhaupt eine hölzerne Hülse eingesetzt werden soll. Besondere Maßnahmen sind erforderlich, weil verhindert werden muss, dass flüchtige Bestandteile der Mine in das Holz eindiffundieren oder gar im Holz migrieren, dadurch der Mine entzogen werden und womöglich die Lackierung an der Außenoberfläche beeinträchtigen. Dieses Problem kann sich übrigens auch bei Kunststoffen stellen, insbesondere bei geschäumten Kunststoffen. Auch in Kunststoffe können flüchtige Bestandteile eindiffundieren und, wenn sie den Kunststoff nach einiger Zeit intensiv genug durchsetzt haben, womöglich die Außenoberfläche beeinträchtigen.

Um diesem Problem abzuhelfen, schlägt die deutsche Patentanmeldung DE 2 834 479 vor, einen kosmetischen Stift mit einer Fettmine zu bauen, welche mit einer metallischen Ummantelung versehen wird, bevor sie in die Hülse eingebracht wird. Eine metallische Ummantelung stellt eine gute Sperre dar, produziert aber unnötigen Aufwand. Zudem ist sie auch beim Anspitzen des Stifts hinderlich. Die metallische Ummantelung kann zwar sehr dünn sein und quasi durch eine Folie gebildet werden. Die mit dem Spitzer abgeschnittenen langen, schmalen Folienstreifen neigen aber dazu zu verknäulen, denn anders als bei den abgeschnittenen Holzspänen zeigt sich hier kein Spanbruch.

Dem gleichen Problem widmet sich die deutsche Patentanmeldung DE 31 37 4 86 A1. Hier wird vorgeschlagen, die Mine in ein Röhrchen aus einem spritzbaren Kunststoffmaterial einzubringen, wobei das Röhrchen außen mit einer für Lösungsmittel undurchdringlichen Schicht überzogen wird, etwa in Gestalt eines Kunststofffilms aus Polyester. Eine derartige Konstruktion ist nicht nur aufwendig, sondern vermag auch die hohen optischen und haptischen Anforderungen nicht zu erfüllen, die an einen Kosmetikstift gestellt werden. Außerdem kann der Film, wenn er als Schrumpfschlauch angebracht wird, Falten werfen oder generell unerwünschte Überlappungen bilden. Im Übrigen ist der Einbau eines Kunststofffilms auch deswegen problematisch, weil der Kunststofffilm beim Anspitzen angeschnitten und nicht immer sauber abgeschnitten wird, sodass das angespitzte Ende Gefahr läuft, alsbald unansehnlich auszusehen. Zudem stellt sich das oben bereits für die Metallfolie angesprochene Problem des fehlenden Spanbruchs. Diese Probleme sind dem Fachmann bekannt, auch wenn über Anspitzbarkeit in der besagten Patentanmeldung nichts ausgesagt wird.

Auch das europäische Patent EP 0 613 634 B1 widmet sich dieser Problemstellung. Hier wird vorgeschlagen, eine kombinierte Stifthülse zu bilden, die aus einem dünnwandigen Kunststoffröhrchen besteht, das in die Aufnahmeöffnung der eigentlichen Stifthülse eingeschoben wird. Nach dem Zusammenbau dieser beiden Teile wird dann die Mine eingegossen. Augenscheinlich hat das eingeschobene, dünnwandige Kunststoffröhrchen die Aufgabe die Mine zu versiegeln und über die Gießtemperatur der Mine hinaus formstabil zu bleiben. Aufgrund seiner Dünnwandigkeit steht es dem Anspitzen nicht im Wege, selbst wenn vergleichsweise harter Kunststoff zum Einsatz kommt. Demgegenüber kann für die eigentliche Stifthülse ein gut anspitzbarer Kunststoff verwendet werden, der keine Rücksicht auf das Diffusionsverhalten der Minenbestandteile nehmen muss.

Generell gilt, dass bei der Herstellung einstückiger Stifthülsen aus Kunststoff ein mehrfacher Zielkonflikt besteht.

Zum einen muss ein Kunststoff verwendet werden, der weich genug ist, um ein Anspitzen mithilfe eines nach dem Prinzip des manuellen Bleistiftspitzers arbeitenden Spitzers zu erlauben.

Sodann muss der Kunststoff gleichzeitig über die Gießtemperatur der Mine hinaus formbeständig sein. Schließlich muss der Kunststoff eine möglichst ansprechende Oberfläche ausbilden, um mit möglichst geringer Nacharbeit das gewünschte optische, haptische sowie hochwertige Erscheinungsbild zu bieten.

Um insoweit einen brauchbaren Kompromiss zu finden, kommen vielfach von Haus aus relativ harte Kunststoffe für die Herstellung der Stifthülse zum Einsatz. Diese zeigen die notwendige Beständigkeit. Die Anspitzbarkeit wird hier meist dadurch gewährleistet, dass die Kunststoffe geschäumt werden. Geschäumte Kunststoffe lassen sich allerdings nicht im Wege des Spritzgusses verarbeiten, sondern machen es notwendig, die Stifthülse durch Extrudieren herzustellen. Durch das Aufschäumen und das Extrudieren leidet aber die Oberflächengüte, sodass solche Stifthülsen ohne Nachbehandlung nicht gut verkäuflich sind.

Ein Beispiel hierfür ist das US-Patent 5 360 281, das Schutz für Stifthülsen aus aufgeschäumtem Kunststoff beansprucht. Zwar spricht dieses Patent auch den Gedanken an, Stifthülsen durch Spritzgießen herzustellen, der Gedanke hat aber keinen Eingang in die Ansprüche gefunden - offensichtlich, weil die vorgeschlagenen Kunststoffe ungeschäumt eine zu schlechte Anspitzbarkeit zeigen.

Schließlich ist noch die US-Patentanmeldung 2013/0121747 A1 zu nennen, die sich zum Ziel gesetzt hat, Stifte mit einer in chemischer und mechanischer Hinsicht besonders sicheren Stifthülse bereitzustellen. Dies soll erreicht werden, indem eine Kunststoffmischung gewählt wird, die bei der Herstellung und im Gebrauch kein VOC freigibt und die splitterfrei bricht, sodass die entsprechenden Stifte auch für Kleinkinder geeignet sind.

Darüber hinaus sollen die Stifte auch noch gut anspitzbar sein.

Um dieses Problem zu lösen, schlägt das besagte US-Patent vor, dass für die Herstellung der Stifthülsen eine Kunststoffmischung zum Einsatz kommt, die aus
➢ mindestens einem Styrol-Butadien-Copolymer,
➢ sowie mindestens einem Styrol-Butadien-Styrol-Blockcopolymer,
➢ und mindestens einem weiteren Kunststoff aus der Gruppe der Styrolpolymere, Styrol-Acrylnitril-Polymere, der Acylnitril-Butadien-Styrol-Polymere, der Acryl-Styrol-Methylmetacrylate oder einer Kombination der genannten Kunststoffe,
➢ sowie mindestens einem Hilfsstoff besteht.

Mit den oben angesprochenen Problemen bei der Herstellung von Kosmetikstiften befasst sich diese Patentanmeldung nicht. Insbesondere befasst sich die Anmeldung weder mit den beim Minengießen auftretenden Problemen, noch mit dem Problem, wie sich eine Außenoberfläche von hoher Güte erreichen lässt. Auch für das von ihm erkannte Problem des Migrierens von Minenbestandteilen hält dieses US-Patent keine zufriedenstellende Lösung bereit. Das US-Patent schlägt vor, dem Austrocknen von Minen mit flüchtigen Bestandteilen dadurch zu begegnen, dass der Kunststoffmischung, aus der die Hülse hergestellt wird, Wachse zugemischt werden sollen. Diese Lösung ist aber insbesondere im Kosmetikbereich unzulänglich, da sich nicht garantieren lässt, dass die dem Kunststoff zugesetzten, technischen Wachse nicht ihrerseits in die Mine migrieren, was unerwünscht ist, da die Mine nur kosmetisch zulässige und unbedenkliche Substanzen in definierter Menge abgeben soll.

Die JP H06 255294 A zeigt einen Stift, der aus einer Mine und einer Hülse aufgebaut ist. Diese Druckschrift versucht darzustellen, wie eine natürliche holzartige Haptik und/oder Optik hergestellt werden kann.

### DAS DER ERFINDUNG ZU GRUNDE LIEGENDE PROBLEM

Demgegenüber ist es in einem ersten Schritt Aufgabe der Erfindung, einen Stift zum Auftragen einer Farb-und/oder Kosmetiksubstanz anzugeben, der eine einstückige, vollständig aus Kunststoff bestehende Hülse aufweist, die sich vorzugsweise mithilfe eines Bleistiftspitzers von Hand anspitzen lässt und eine hochwertige, vorzugsweise glänzende Außenoberfläche aufweist, die nach dem Spritzgießen keiner Nacharbeit mehr bedarf, mit Ausnahme des Anbringens einer eventuellen Beschriftung oder anderer, meist lokaler Dekorationen.

### DIE ERFINDUNGSGEMÄSSE LÖSUNG

Der erfindungsgemäße Stift besitzt eine Mine aus der aufzutragenden Substanz mit oder ohne flüchtige Bestandteile und eine, die Mine ummantelnde, einstückig und einstofflich spritzgegossene Hülse aus einem thermoplastischen Material, das aus einer Mischung einer ersten und einer zweiten Kunststoffphase besteht, von denen jede, in Reinform, unterschiedliche Eigenschaften besitzt.

Der Begriff "Kunststoffphase" im Sinne der Erfindung ist wie folgt definiert:
Im einfachsten, gut beherrschbaren Fall, besteht eine der beiden Phasen jeweils aus nur einem einzigen polymeren Material (und bildet dadurch eine Phase im weiteren Sinne), während für die andere Phase die nachfolgende Definition gilt. In anspruchsvolleren Fällen gilt für beide Phasen die nachfolgende Definition, die eine Phase im engeren Sinne beschreibt.

Eine Phase im engeren Sinne besteht aus unterschiedlichen Kunststoffen die alle entweder schwach polar oder alle stattdessen stark polar sind, gemäß der hier angegebenen Polaritätsdefinition.

Eine Phase wird so gewählt, dass sie sich aus thermoplastischen Kunststoffen zusammensetzt, die jeweils sowohl klassische Thermoplaste, als auch thermoplastische Elastomere sein können. Es können beide Substanzklassen, Thermoplaste und thermoplastische Elastomere, in unterschiedlichen Anteilen von 0-100% in der Phase enthalten sein.

Entscheidend ist, dass sich beide der erfindungsgemäß zum Einsatz kommenden Phasen zwar in einem Compoundiervorgang bzw. auf einer Extruderschnecke nach thermischem Aufschmelzen mechanisch miteinander makroskopisch homogen vermischen lassen, aber dazu neigen, sich ohne mechanische Krafteinwirkung wieder teilweise zu entmischen. Dabei wirkt die Diffusionslimitierung in der hochviskosen geschmolzenen Polymermatrix der spontanen vollständigen Entmischung entgegen. Die treibende Kraft für den Entmischungsvorgang ist ein Polaritätsunterschied, der jeweils wechselseitig alle Komponenten der einen von denen der anderen Phase unterscheidet. Eine Phase wirkt dabei als "Strukturphase", die in ihrem überwiegend thermoplastischen Verhalten für eine Grundstabilität der erkalteten Schafthülsen verantwortlich ist und die Ausbildung einer hochwertigen, glänzenden bis hochglänzenden, kratzfesten Oberfläche ermöglicht. Die zweite, durch zumindest teilelastisches Verhalten gekennzeichnete "Störphase" ermöglicht nach der Abkühlung eine Schwächung der Struktur der Strukturphase im Innenbereich der Schafthülse - nach Teilentmischung - und garantiert so eine insgesamt weichere Struktur des Kernmaterials und eine bessere Spitzbarkeit.

"Einstofflich" spritzgegossen bedeutet im Sinne der Erfindung, dass nur ein einziges Material (auch wenn es in sich eine Mischung aus Mischphasen ist) in die Formkavität eingespritzt worden ist, meist in einem einzigen Schuss, ausnahmsweise in mehreren aufeinanderfolgenden Schüssen. Das steht im Gegensatz zum "Overmolding", bei dem erst ein erstes Material in die Formkavität eingespritzt wird und dann - aus einem anderen Materialvorrat - ein zweites Material, das andere Eigenschaften aufweist, aufgespritzt wird.

Der erfindungsgemäße Stift zeichnet sich dadurch aus, dass die erste und zweite Kunststoffphase so gewählt sind, dass sie sich durch das Spritzgießen teilweise entmischen und dadurch eine Hülse bilden, die, in radialer Richtung gesehen, im Bereich ihrer Oberfläche des Außenumfangs (Außenanreicherungszone) eine höhere Konzentration aus der ersten Kunststoffphase (im Sinne einer Konzentration der gesamten ersten Kunststoffphase oder, nicht bevorzugt aber begrifflich eingeschlossen, zumindest eines Bestandteils davon) aufweist, als in der Mitte, wo im Regelfall eine mittige Verarmungszone zu verzeichnen ist. Zugleich sind die erste und die zweite Kunststoffphase so gewählt, dass die Hülse auch im Bereich der Oberfläche des Innenumfangs (Innenanreicherungszone) eine höhere Konzentration aus der ersten Kunststoffphase aufweist(im Sinne einer Konzentration der gesamten ersten Kunststoffphase oder, nicht bevorzugt aber begrifflich eingeschlossen, zumindest eines Bestandteils davon).

Der erfindungsgemäße Stift zeichnet sich des Weiteren dadurch aus, dass er sich mittels eines nach dem Prinzip eines Bleistiftspitzers arbeitenden Spitzers anspitzen lässt, d. h. durch das Drehen des Stifts von Hand.

Zur erfindungsgemäßen Bestimmung, ob sich ein Stift anspitzen lässt, gibt es verschiedene alternative Kriterien, die im Idealfall kumulativ erfüllt sind:
➢ Es lässt sich dreimal unmittelbar hintereinander mit dem Hand-Spitzer an dem Ende des Stiftes, dessen durchgängiger Kegel dem Winkel entspricht, in dem die Spitzerklinge angeordnet ist, ein über mindestens fünf, besser mindestens acht, volle Stiftumdrehungen durchgehender Span abnehmen. D. h. der Span bildet eine durchgängige Locke, vorzugsweise mit über die ganze Länge hinweg konstant bleibender Dicke (+/-10% schwankend) und idealerweise ohne dass im Mittel ein Dickenanstieg von mehr als 15%, besser nur 10%, zum Ende des Spans hin zu beobachten ist.
➢ Die im Regelfall kegelige Schnittfäche, die ein solcher Spitzer hinterlässt, ist dabei vorzugsweise gleichmäßig glatt. Sie weist (abgesehen von der örtliche Absetzkante, welche die von der Spitzerklinge bei Abbruch des Anspritzvorgangs erreichte Position markieren kann) vorzugsweise gar keine lokalen Ausbrüche, Absplitterungen oder Stufen z. B. in Gestalt von Rattermarken auf oder zeigt jedenfalls keine lokalen Ausbrüche, Absplitterungen oder Stufen mit einer Tiefe von mehr als 0,3 mm.

Es ist im Regelfall die zweite Kunststoffphase, die so gewählt ist, dass durch sie sichergestellt ist, dass sich die Hülse mittels eines Spitzers nach Art eines Bleistiftspitzers anspitzen lässt. Das Maß hierfür ist ein Vergleich mit einem Stift, der eine identisch dimensionierte Hülse aufweist, die vollständig aus der ersten Kunststoffphase besteht und sich auf die beschriebene Art und Weise nicht anspitzen lässt.

Man erhält also in einem Zug quasi eine mehrschichtige Hülse, wie man sie bisher nur mit einem deutlich aufwendigeren Overmolding-Verfahren herstellen kann, bei dem erst der eine Hülsenteil aus dem ersten Material gespritzt wird und dann, nach dem Ziehen beweglicher Schieber, der zweite Hülsenteil aus dem zweiten Material aufgespritzt wird.

Der erfindungsgemäße Stift zeichnet sich dadurch aus, dass die der ersten Kunststoffphase in Reinform inhärenten Eigenschaften durch ihre mithilfe des Spritzgießens erzwungene Anreicherung an der Oberfläche des Außenumfangs und des Innenumfangs prägend zur Geltung kommen, selbst wenn sogar direkt an der jeweiligen Oberfläche auch noch ein gewisser Anteil der zweiten Kunststoffphase anzutreffen ist. Auf diese Art und Weise bewirkt die erste Kunststoffphase, dass sich - jeweils in ein und demselben Urformprozess - an der Oberfläche des Außenumfangs der Stifthülse eine Schicht mit einer hohen Oberflächengüte ausbildet. Die Oberfläche kann bei richtiger Wahl der ersten Kunststoffphase - mit bloßem Auge gesehen - absolut eben und spiegelglatt sein. Zusätzlich bildet sich an der Oberfläche des Innenumfangs der Stifthülse eine Schicht mit einer Sperrfunktion aus. Diese Sperrfunktion wird später noch näher erläutert. Sie hat einen positiven Einfluss beim Minengießen und/oder für die Lagerfähigkeit der Mine.

Erfindungsgemäß wird hier eine Aufgabenteilung vorgesehen. Die erste Kunststoffphase wird so gewählt, dass eine hervorragende Oberflächengüte erreicht werden kann. Wenn die erste und die zweite Kunststoffphase richtig aufeinander abgestimmt sind, sodass sich die notwendige Mischung einstellt, dann lässt sich auf diese Art und Weise eine Oberfläche erreichen, die spiegelnden Glanz zeigt, vergleichbar mit dem Glanz eines Klavierlacks. Bei entsprechender Abstimmung lässt sich alternativ auch eine fehlerfreie, sehr homogene seidenmatte Optik erreichen.

Bei der Wahl der ersten Kunststoffphase muss keine Rücksicht auf die Anspitzbarkeit genommen werden. Denn die Außenanreicherungszone, in der sich die erste Kunststoffphase außenseitig vorzugsweise auf mehr als 80 Gew.-%, besser auf mehr als 90 Gew.-% anreichert, kann in radialer Richtung dünn gehalten werden - ggf. deutlich dünner als beim Overmolding.

Das Gleiche gilt meist für die Innenanreicherungszone, in der sich die erste Kunststoffphase innenseitig meist zumindest auf ≥70 Gew.-% anreichert.

Idealerweise beträgt die Erstreckung R_{AA} bzw. R_{IA} der Außen- und/oder der Innenanreicherungszone 0,075 mm bis 0,5 mm, besser lediglich bis zu 0,35 mm, gemessen von der Oberfläche des Außen- bzw. Innenumfangs in radialer Richtung nach innen. Dadurch behindert die erste Kunststoffphase die Anspitzbarkeit nicht, auch wenn sie sich tendenziell eher schlecht zerspanen lässt.

Es hat sich als günstig für die Verwirklichung der jeweiligen Funktion herausgestellt, wenn die Innenanreicherungszone eine etwas geringere radiale Erstreckung R_{IA} aufweist als die Außenanreicherungszone, deren radiale Erstreckung R_{AA} beträgt.

Vorzugsweise gilt also: R_{AA} > R_{IA} und idealerweise gilt sogar R_{AA} > R_{IA} *12/10.

Bei entsprechend intensiver Kühlung der Spritzgussform dort, wo sie die Außenanreicherungszone abbildet, lässt sich erreichen, dass die freie Oberfläche der Außenanreicherungszone zumindest zu 95 Gew.-%, in manchen Fällen sogar zu 97 Gew.-% und mehr, aus der ersten Kunststoffphase oder einem Kunststoff der ersten Kunststoffphase (und der ggf. in ihn eingelagerten Pigmente und/oder Füllstoffe) besteht.

Innerhalb der gesamten Außenanreicherungszone liegt der Anteil der ersten Kunstoffphase bei ≥ 80 Gew.-%, deutlich besser bei ≥ 90 Gew.-%.

Bei entsprechend intensiver Kühlung der Spritzgussform dort, wo sie die Innenanreicherungszone abbildet, lässt sich erreichen, dass der Anteil der ersten Kunststoffphase innerhalb der gesamten Innenanreicherungszone zumindest bei ≥ 67 Gew.-%, besser bei ≥ 70 Gew.-%, liegt.

Korrespondierend damit geht oft eine mittige Verarmungszone einher. Innerhalb dieser mittigen Verarmungszone, die in der Mitte der Hülse liegt, ist der örtliche Gew.-%-Anteil der ersten Kunststoffphase gegenüber dem Gew.-%-Anteil, den die erste Kunststoffphase in der zum Spritzgießen bereitgestellten Spritzgussmischung vom Einspritzen hatte, verringert. Der Begriff der Mitte der Hülse bezeichnet jedenfalls einen Bereich von +/-0,75 mm oder zumindest +/- 0,5 mm um den Bereich des Radius, der sich als Mittelwert des Radius an der Oberfläche des Außenumfangs und des Radius an der Oberfläche des Innenumfangs errechnet, wobei bei nicht-runden Konturen der gemittelte Radius angesetzt wird.

Je nach Anteil der ersten Kunststoffphase an der in die Formkavität eingespritzten Kunststoffmasse, liegt der Anteil der ersten Kunststoffphase innerhalb der gesamten mittigen Verarmungszone vorzugsweise bei zumindest bei ≤ 60 Gew.-%, besser bei ≤ 55 Gew.-%.

Hingegen können für die zweite Kunststoffphase Kunststoffe ausgewählt werden, die dort, wo sie prägend an der Ausbildung der Kunststoffstruktur beteiligt sind, die Festigkeit der ersten Kunststoffphase mindern, auch wenn die erste Kunststoffphase gegebenenfalls den höheren Gewichtsanteil an der Gesamtmischung aufweist. Dabei muss bei der Wahl der zweiten Kunststoffphase keine Rücksicht auf die Oberflächengüte und/oder auf ihre Sperrfähigkeit gegenüber Minenbestandteilen genommen werden, da die zweite Kunststoffphase nicht prägend an der Ausbildung der Oberflächen beteiligt ist.

Das Herstellen der Hülse des Stifts durch Spritzgießen verleiht dem Stift im vorliegenden Fall eine bestimmte körperliche Beschaffenheit. Denn erst das Spritzgießen führt im vorliegenden Fall dazu, dass sich die erste Kunststoffphase an der Oberfläche des Außenumfangs anreichert und dadurch die gegebenenfalls klavierlackartige oder jedenfalls besonders hochwertige Oberfläche ausbildet - obwohl die erste und die zweite Kunststoffphase vor dem Einspritzen in die Spritzgussform gleichmäßig vermischt worden sind. Zwar sind die Gründe, warum es zu einer solchen Entmischung kommt, noch nicht vollständig geklärt, dennoch ist zu erkennen, dass das Auftreffen der Mischung aus der ersten und der zweiten Kunststoffphase, die in die Form eingespritzt wird, auf die gut gekühlte Oberfläche der Formkavität, zunächst zu einer schroffen Abkühlung führt. Diese Abkühlung führt eine Entmischung herbei, weil die eine Kunststoffphase schneller erstarrt als die andere Kunststoffphase. Die unterschiedlichen Polaritäten der Phasen wirken dabei als treibende Kräfte der Entmischung und die unterschiedlichen Temperaturverhältnisse an der Oberfläche, bzw. im Inneren der Werkzeugkavität bewirken ein sequentielles Erstarren der beiden Phasen und eine makroskopische Entmischung aufgrund der unterschiedlich kalten Zonen im entstehenden Formkörper.

Auf diese Art und Weise wird die gut gekühlte Oberfläche der Formkavität mit einer Schicht bedeckt, die vollständig oder überwiegend aus der ersten Kunststoffphase besteht. Die so entstehende Schicht ist meist sehr fest, da der Anteil der zweiten Kunststoffphase in ihr keine prägende Störwirkung entfalten kann.

Da die besagte Schicht aufgrund ihrer schlechten Wärmeleitfähigkeit eine Isolierung darstellt, wird eine weitere schroffe Abkühlung verhindert. Das führt dazu, dass die Entmischung unterhalb der besagten Schicht abnimmt, meist rapide. In der Mitte bleibt also die Mischung aus der ersten und der zweiten Kunststoffphase als solche auch im Zuge des Erstarrens erhalten, auch wenn im Regelfall eine Änderung der Gew.-%-Anteile zu verzeichnen ist. Da die zweite Kunststoffphase das Gefüge stört, ist die erstarrte Schicht in diesem Bereich weniger fest als die besagte Schicht, die sich an der gekühlten Oberfläche der Formkavität ausgebildet hat.

Der Begriff des Spitzers bzw. Bleistiftspitzers bezeichnet hier den klassischen Bleistiftspitzer, wie er für Bleistifte, Buntstifte und Kosmetikstifte zum Einsatz kommt. Ein solcher Bleistiftspitzer besitzt einen Körper aus Metall, Holz oder Kunststoff, der eine kegelige Aufnahme für die anzuspitzende Spitze des Stifts aufweist und mindestens eine Klinge, die bei entsprechendem Drehen des Stifts von Hand einen Span von der Spitze abnimmt.

Der Begriff des thermoplastischen Materials bezeichnet hier ein Material, das sich durch Erwärmen in einen viskosen Zustand versetzen lässt, in dem es spritzgegossen werden kann. Der Begriff deckt klassische Thermoplaste und TPEs (thermoplastische Elastomere) ab.

Die erste und die zweite Kunststoffphase sind chemisch unterschiedlich, bestehen also im Regelfall aus unterschiedlichen Materialklassen bzw. Kunststofftypen.

Die vorstehende Definition der verschiedenen Begrifflichkeiten gilt auch für das nachfolgend Gesagte, es sei denn, dass sich aus dem Kontext eindeutig etwas anderes ergibt.

### BEVORZUGTE WEITERBILDUNGEN DER ERFINDUNG

Die Konzentration der ersten Kunststoffphase nimmt von der Außenanreicherungszone und von der Innenanreicherungszone zur Mitte hin vorzugsweise kontinuierlich ab.

Das unterscheidet den erfindungsgemäßen Stift bzw. seine mehrschichtige Hülse von bekannten Hülsen, die ihre Zwei- oder Mehrschichtigkeit erst dadurch erhalten, dass eine durchgängige zusätzliche Kunststoffschicht, eine durchgängige Folie, eine durchgängige Lackschicht oder dergleichen aufgebracht worden ist.

Natürlich können am Ende auch die Hülsen insbesondere zur partiellen Zusatzdekoration mit weiteren Kunststoff- oder Lackschichten sowie Folien versehen werden, z. B. zum Zweck der Beschriftung.

Vorzugsweise wird die Hülse über ihren gesamten Querschnitt hinweg sowohl aus der ersten und der zweiten Kunststoffphase gebildet, wobei die beiden Kunststoffphasen aber in lokal unterschiedlichen Gewichtsanteilen anzutreffen sind, im Regelfall derart, dass sich die Gewichtsanteile kontinuierlich entlang des Querschnitts (in radialer Richtung gesehen) verändern. Der Begriff "gesamter Querschnitt" umfasst in manchen Fällen nicht die Randschicht im Bereich bis zu 0,2 mm unter der Oberfläche des Außenumfangs. Für die Randschicht im Bereich bis zu 0,2 mm unter der Oberfläche des Innenumfangs gilt gegebenenfalls das Gleiche.

Im Idealfall weist die Hülse jeweils nur in Oberflächennähe eine separate Schicht auf, z. B. in Form der wie unten erläuterten abziehbaren Haut und besitzt nicht über den ganzen Querschnitt hinweg eine schieferige Struktur. Denn dies würde die Neigung unerwünscht verstärken, dass der beim Anspitzen abgeschälte Span unwillkürlich in feinste Krümel zerfällt und dadurch Verschmutzungen hervorruft, auch an der Kosmetikmine.

Die Sperrschicht kann eine mechanische Sperrschicht sein, die sehr glatt ist und dadurch verhindert, dass es beim Gießen der Mine zu Lufteinschlüssen kommt - wie man sie häufig beobachtet, wenn Minen in hölzerne Hülse gegossen werden, deren Innenoberfläche relativ rau ist.

Die Sperrschicht kann stattdessen oder zugleich eine chemische Sperrschicht sein, was klar bevorzugt wird. Eine solche Sperrschicht zeichnet sich dadurch aus, dass sie die Migration von Minenbestandteilen begrenzt. Je nach Wahl der ersten Kunststoffphase wird insbesondere die Migration von Isoparaffinen und Silikonen begrenzt und/oder die Migration von Wasser und polaren flüchtigen Substanzen, wie z. B. Alkoholen. Eine solche Begrenzung leistet die erste Kunststoffphase, wenn sie die Migration jedenfalls soweit herabsetzt, dass keine erkennbare Beeinträchtigung (Verhärtung/Austrocknung) der Mine zu verzeichnen ist, auch nach einer Einlagerung von 12 Monaten bei einer konstanten Temperatur von 23° C nicht. Von einer Sperrschicht im engeren Sinne spricht man jedenfalls dann, wenn die erste Kunststoffphase (in Reinform) gegenüber Isoparaffinen und Silikonen und/oder gegenüber Wasser und polaren flüchtigen Substanzen, wie z. B. Alkoholen, einen kleineren Diffusionskoeffizienten aufweist, als die zweite Kunststoffphase in Reinform. Weiterhin ist die erste Kunststoffphase jeweils nicht quellbar in den flüchtigen oder flüssigen Bestandteilen, die durch Migration aus der Mine auswandern können.

Als besonders vorteilhaft hat es sich erwiesen, als erste Kunststoffphase eine Reinsubstanz oder Mischung aus schwach polaren Kunststoffen mit einer Elektronennegativitätsdifferenz ΔEN im Bereich zwischen jeweils einschließlich 0,3 und 0,5 zu verwenden, der aber eine monomere Komponente bzw. einen Block besitzt, die/der schwache Wechselwirkungen mit einem anderen, stark polaren Kunststoff ermöglicht, so dass eine unmittelbare spontane Entmischung verhindert wird. Als Elektronennegativitätsdifferenz ΔEN versteht man hier und im Folgenden den maximalen Elektronenegativitätsunterschied zwischen benachbarten Atomen in der Polymerstruktur.

Besonders günstig ist es dabei, einen oder mehrere Kunststoffe aus der Klasse der Styrol-Acrylnitrile bzw. Acrylnitril-StyrolCopolymere zu verwenden (Kurzbezeichnung: SAN, Nomenklatur hier und überall gem. DIN EN IDSO 18064). SAN ist schwach polar, kann aber über den in ihm enthaltenen Acrylnitrilanteil auch Wechselwirkungen mit anderen stark polaren Kunststoffen eingehen.

Eine bevorzugte SAN-Zusammensetzung besteht zu 65 Gew.-% bis 80 Gew.-% aus Styrol- und zu 20% Gew.-% bis 35 Gew.-% aus Acrylnitrilanteilen, sowie jeweils unterschiedlichen molaren Massen. Eine besonders günstige Zusammensetzung besteht zu 70% Gew.-% aus Styrol- und zu 30% Gew.-% aus Acrylnitrilanteilen (mit jeweils +/- 1,5% Toleranz). Idealerweise kommt das unter der Handelsmarke "LURAN 378P^{™}" von der Firma BASF SE, Ludwigshafen, Deutschland vertriebene Styrol-Acrylnitril zum Einsatz.

Die Styrol-Acrylnitrile und in besonderem Maß LURAN 378P^{™} zeichnen sich in Reinform, aber auch in Mischungen mit anderen geeigneten Kunststoffen, durch ihre chemische Beständigkeit aus, insbesondere auch gegenüber Aminen, die häufig als Neutralisationsmittel in Kosmetikmassen eingesetzt werden. Die Styrol-Acrylnitrile und in besonderem Maß LURAN 378P^{™} zeichnen sich ferner durch ihre Wärmeformbeständigkeit aus. Diese Eigenschaften werden hier in Verbindung mit der erfindungsgemäßen Entmischung im Zuge des Spritzgießens genutzt, um der Oberfläche am Innenumfang der Hülse ihre überlegenen Eigenschaften zu verleihen.

Zugleich zeichnen sich die Styrol-Acrylnitrile und in besonderem Maß LURAN 378P^{™} durch ihr vorzügliches Erscheinungsbild an der Oberfläche aus, was hier in Verbindung mit der erfindungsgemäßen Entmischung im Zuge des Spritzgießens genutzt wird, um der Oberfläche am Außenumfang der Hülse die notwendige Oberflächengüte zu verleihen.

Die Styrol-Acrylnitrile und in besonderem Maß LURAN 378P^{™} zeigen bekanntlich von Haus aus eine hohe Festigkeit, insbesondere eine hohe Kratzfestigkeit und sind spröde. Aus reinen Styrol-Acrylnitrilen gefertigte Hülsen lassen sich daher nicht ohne Weiteres mittels eines Bleistiftspitzers mit normalem Kraftaufwand anspitzen.

Alternativ kann als erste Kunststoffphase ein Kunststoff aus der Klasse der Acrylnitril-Ethylen-Propylen-Styrole (AES) zum Einsatz kommen. Idealerweise wird das von der Firma ROMIRA Gesellschaft für Vertrieb & Verarbeitung von Chemieprodukten mbH, Pinneberg, Deutschland unter dem Markennamen "ROTEC A702^{™}" vermarktete Acrylnitril-Ethylen-Propylen-Styrole verwendet.

Aber auch ABS oder Mischungen von SAN, ABS und reinem Polystyrol sind alternativ möglich, sowie Styrol-Olefin Copolymere. Geringe Anteile von unpolaren bis schwach polaren TPEs, wie TPE-S oder TPE-O können hier zugesetzt werden, wobei SBS als TPE generell zu einer Reduzierung des Oberflächenglanzes führen kann, aber auch hilft, die Sprödigkeit der aus dieser ersten Strukturphase sich abscheidenden Außenhaut des Formkörpers zu modulieren.

Im umgekehrten Fall einer hohen Polarität der Strukturphase kann auch die erste Kunststoffphase aus mindestens einem oder einer Mischung polarer Kunststoffe mit einer Elektronegativitätsdifferenz Δ EN größer0,5 - 1,7 bestehen, z. B. aus der Familie der Polyester, Polycarbonate, Polymethylmethacrylate, Polyacrylate, Polyurethane oder Polyamide, wobei hier PET und Derivate, PCT, PBT sowie Polycarbonate und deren Mischungen bevorzugt eingesetzt werden können. Auch hier können geringe Mengen von polaren TPEs (wie TPA, TPC oder TPU) im Bedarfsfall zur Reduzierung der Sprödigkeit beigemengt werden.

Die Erstarrungstemperatur der Mischung der ersten Kunststoffphase ist dabei stets so zu wählen, dass diese unterhalb derer der zweiten Phase liegt, damit die Entmischung in geeigneter Weise stattfinden kann und sich die hochwertige, vorzugsweise klavierlackartige Oberflächenstruktur ausbilden kann.

Die zweite Kunststoffphase wird erfindungsgemäß so ausgewählt, dass sie die Festigkeit der ersten Kunststoffphase dort schwächt, wo die Hülse nicht durch die besonderen Eigenschaften der ersten Kunststoffphase geprägt zu werden braucht.

Generell lässt sich sagen, dass die zweite Kunststoffphase vorzugsweise mindestens ein Kunststoff oder eine Mischung von Kunststoffen sein sollte, die sich im Zuge des Spritzgießens über Entmischungsphänomene aus der ersten Kunststoffphase und in sich, unter Ausbildung teilkristalliner Bereiche wie in Polyethylen und/oder durch Mikrophasenseparation wie für thermoplastische Elastomere üblich, physikalisch vernetzt. Hierdurch ergibt sich eine gewisse Weichheit und/oder Elastizität im Material. Die Entmischung durch die unterschiedliche Polarität führt dabei zu einer generellen Schwächung der Strukturkomponente, so dass diese sich besser spitzen lässt.

In der Mischung mit einer unpolaren bis schwach polaren ersten Kunststoffphase ist die zweite Kunststoffphase mindestens ein polarer thermoplastischer Kunststoff mit einer

Elektronennegativitätsdifferenz ΔEN im Bereich > 0,5 und 1,7. Als in dieser Kombination besonders vorteilhaft hat es sich erwiesen, als zweite Kunststoffphase einen Kunststoffmischung aus mindestens einem Vertreter der Klasse der polaren thermoplastischen Elastomere (Kurzbezeichnung TPE-ET) einzusetzen, vorzugsweise in Reinform. Aber auch Mischungen von TPE-ET mit anderen polaren thermoplastischen Elastomeren, insbesondere thermoplastischen Polyamiden oder Polyurethanen, aber auch Beimischungen von polaren Thermoplasten wie z. B. PET, PCT, PBT und Derivaten, Polycarbonaten, PMMA-Derivaten, Polyacrylaten, Polyurethanen und Polyamiden sind möglich.

Insbesondere kommen solche TPE-ET und deren Mischungen zum Einsatz, die sich einer Polyether-Gruppe als Weichsegment bedienen. Als besonders günstig hat sich der Einsatz der zu dieser Klasse gehörenden Unterklasse der polaren thermoplastischen Polyesterelastomere bzw. der polaren thermoplastischen Copolyester (Kurzbezeichnung TPC-ET) erwiesen. Typischerweise besteht dieser Kunststoff aus einem BlockCopolymer mit wechselweise harten und weichen Abschnitten. Die chemischen Wechselwirkungen sind im Wesentlichen Ester- und/oder Ether-basierte Wasserstoffbrückenbindungen. Idealerweise kommt der unter der Handelsmarke Arnitel EM400^{™}" von der Firma DSM Engineering Plastics BV, Urmonderbaan 22, 6167 RD Geleen, The Netherlands hergestellte, polare thermoplastische Copolyester zum Einsatz.

Das Erstaunliche ist, dass die Mischung aus den eben beschriebenen ersten und zweiten Kunststoffphasen dort, wo sie sich nicht weitgehend entmischt (in dem Sinne, dass die Konzentration der ersten Kunststoffphase nicht auf unter 90 Gew.-% absinkt), eine geringere Festigkeit aufweist, als das an sich den einzelnen Komponenten nach zu erwarten wäre. Auf Grund dessen stellt sich eine gute Anspitzbarkeit ein. Dabei spielt hier die nur bedingte Beständigkeit der zweiten Kunststoffphase gegenüber insbesondere polaren flüchtigen oder migrationsfähigen flüssigen Bestandteilen weicher Minenmassen keine Rolle, da die erste Kunststoffphase an der Oberfläche, die unmittelbar mit der Minenmasse in Kontakt kommt, eine Barriereschicht bildet, wie geschildert. Darüber hinaus spielt auf Grund dessen auch der Umstand keine Rolle, dass sich mit einem TPE bzw. TPC-ET keine spiegelnde Oberfläche erreichen lässt.

Handelt es sich bei der ersten Kunststoffphase um eine polare Phase, muss die zweite Kunststoffphase in der Mischung aus mindestens einer unpolaren bis schwach polaren Komponente bestehen. In diesem Falle bietet sich insbesondere der Einsatz von thermoplastischen Elastomeren des Typs SBS oder EPDM und deren Mischungen an. Weiterhin können aber auch Abmischungen mit bevorzugt Polyethylen, Polypropylen und Copolymeren aus Ethylen, und/oder Propylen, und/oder Buthylen und/oder Styrol und/oder Acylnitril zum Einsatz kommen. Auch spritzgussfähige Silikone können in diesem Fall in Reinform oder in Mischungen zum Einsatz kommen.

Vom Grundsatz her denkbar erscheint ein System, in dem die erste Kunststoffphase einen Gewichtsanteil von 20 Gew.-% bis 80 Gew.-%, die zweite Kunststoffphase einen Gewichtsanteil von 80 Gew.-% bis 20 Gew.-% und die Füll- bzw. Hilfsstoffe und Pigmente einen Gewichtsanteil von 0 Gew.-% bis 30 Gew.-%, besser nur bis 15 Gew.-%, besitzen. Verunreinigungen aller Art sind nicht erwünscht und werden oberhalb des Promille-Bereichs insbesondere oberhalb von 15 Gew.-Promille vorzugsweise vermieden. Sofern das im Einzelfall nicht gelingt, können Verunreinigungen bis zu 5 Gew.-%, besser bis zu bis 2,5-Gew-%, tolerabel sein.

Als besonders günstig für die Verwirklichung des erfindungsgemäßen Effekts hat sich indes eine Einstellung des Systems erwiesen, bei dem die erste Kunststoffphase einen Gewichtsanteil von mindestens 45 Gew.-%, besser mindestens 55%, aufweist. Meist wird die empfehlenswerte Obergrenze für die erste Kunststoffphase dann bei 75 Gew.-%, besser bei 65 Gew.-%, liegen. Füll- bzw. Hilfsstoffe und Pigmente mit einem Gewichtsanteil von bis zu 15%, besser nur bis zu 5%, können hinzukommen.

Es bilden die erste und die zweite Kunststoffphase zumindest den überwiegenden Teil der für die Hülse eingesetzten Kunststoffe aus. Das bedeutet, dass die erfindungsgemäße Hülse aus der ersten und der zweiten Kunststoffphase bestehen, indem diese den überwiegenden Teil der Kunststoffmasse bilden, bzw. in manchen Fällen mindestens 90 Gew.-% der eingesetzten Kunststoffmasse bereitstellen. Der beste Fall ist der, dass die erste und die zweite Kunststoffphase sowie die diesen zugesetzten Pigmente und Hilfsstoffe oder nur die beiden Kunststoffphasen zusammen mit den diesen zugesetzten Pigmenten die gesamte, für die Hülse eingesetzte Kunststoffmasse bilden, abgesehen von Verunreinigungen.

Ansonsten können, wie gesagt, Füllstoffe, die Kunststoffmatrix beeinflussen, aber in ihrem Aufbau nicht beteiligt sind, und Hilfsstoffe, wie etwa Pigmente, hinzukommen. Gas- oder Schaumbildner in Mengen, die das Spritzgießen beeinträchtigen, sind zu vermeiden, vorzugsweise vollständig zu vermeiden.

Zu den Hilfsstoffen gehören auch solche Kunststoffanteile, die lediglich nach der Art von Hilfsstoffen in die Matrix aus der ersten und der zweiten Kunststoffphase eingegossen werden und die im Zuge des Spritzgießens nicht aufgeschmolzen werden, beispielsweise ein in gemahlener Form als Füllstoff zugesetztes, quervernetztes Elastomer oder ein Duroplast. Vorzugsweise werden aber derartige Füllstoffe, die selbst aus Kunststoff bestehen, vermieden, da sie die Viskosität erhöhen können und die Entmischung behindern können.

Bevorzugt wird die erste Kunststoffphase so gewählt, dass die Hülse an der Außenumfangsoberfläche einen arithmetisch gemittelten Glanzgrad GU von mehr als 30 GU, besser mehr als 40 GU, aufweist. Die Messung erfolgt nach ISO 2813 auf einer Strecke von 10 mm mit 10 gleichmäßig beabstandeten Messpunkten in Richtung entlang der Längsachse L bei einem Messwinkel von 60°.

Weitere Wirkungen, Vorteile und Ausgestaltungsmöglichkeiten der Erfindung sind den nachfolgend beschriebenen Ausführungsbeispielen zu entnehmen.

### FIGURENLISTE

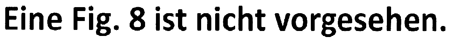

Die Figur 1 zeigt die Hülse eines erfindungsgemäßen Stifts im Mittellängsschnitt.
Die Figur 2 zeigt den kompletten erfindungsgemäßen Stift im Mittellängsschnitt.
Die Figur 3 stellt eine Ausschnittvergrößerung dar und zeigt einen Teil der Bruchfläche einer in Richtung entlang ihrer Längsachse auseinandergerissenen Hülse.
Die Figur 4 zeigt einen Schnitt senkrecht zur Mittellängsachse durch die Hülse eines erfindungsgemäßen Stifts.
Die Figur 5a zeigt den Hautabzugstest im Überblick, zu Beginn, nach dem Einschneiden.
Die Figur 5b zeigt den Hautabzugstest im Verlauf des weiteren Fortschritts im Detail.
Die Figur 5c zeigt den realen Hautabzugstest am Beispiel 3 im Detail, als Fotografie.

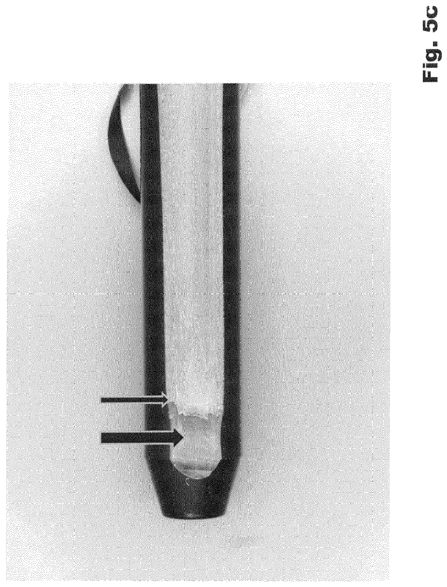

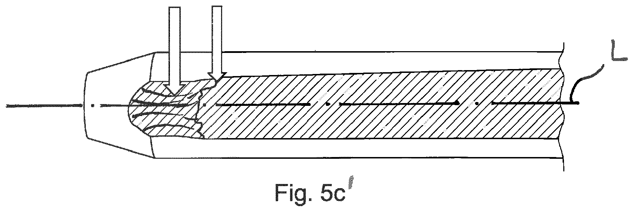

Die Fig. 5c' zeigt das Gleiche, wie die Fig. 5c, aber in zeichnerischer Darstellung.

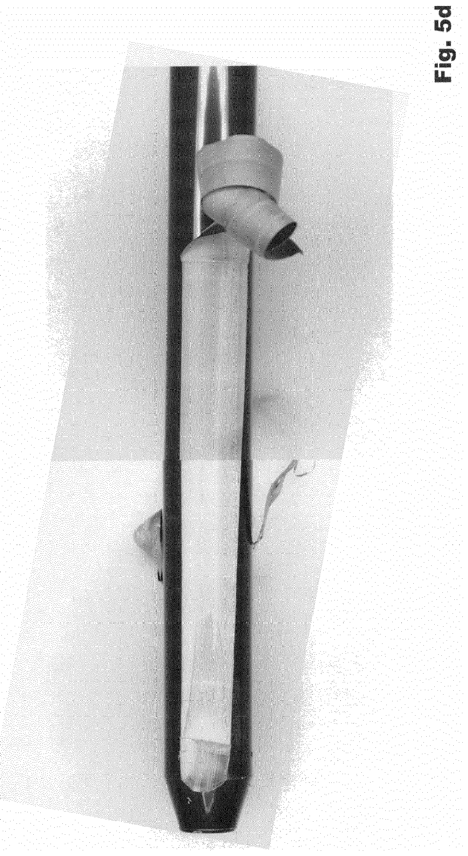

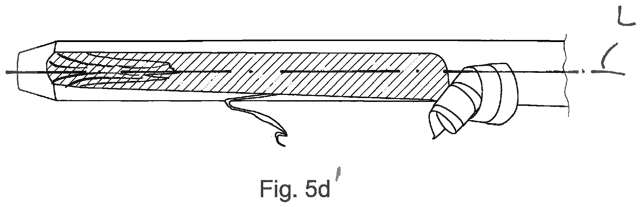

Die Figur 5d zeigt den realen Hautabzugstest am Beispiel 4 im Detail, als Fotografie.
Die Fig. 5d' zeigt das Gleiche wie die Fig. 5d, aber in zeichnerischer Darstellung.

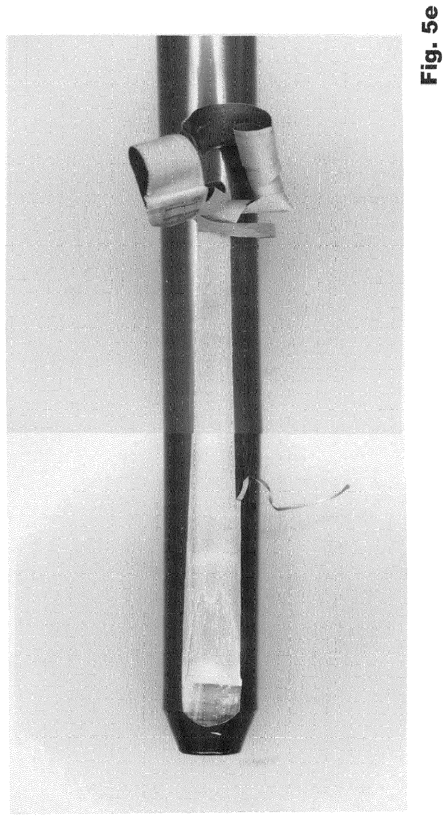

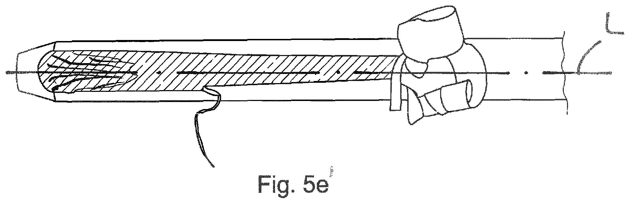

Die Figur 5e zeigt den realen Hautabzugstest am Beispiel 5 im Detail, als Fotografie.
Die Fig. 5e' zeigt das Gleiche wie die Fig. 5e, aber in zeichnerischer Darstellung.

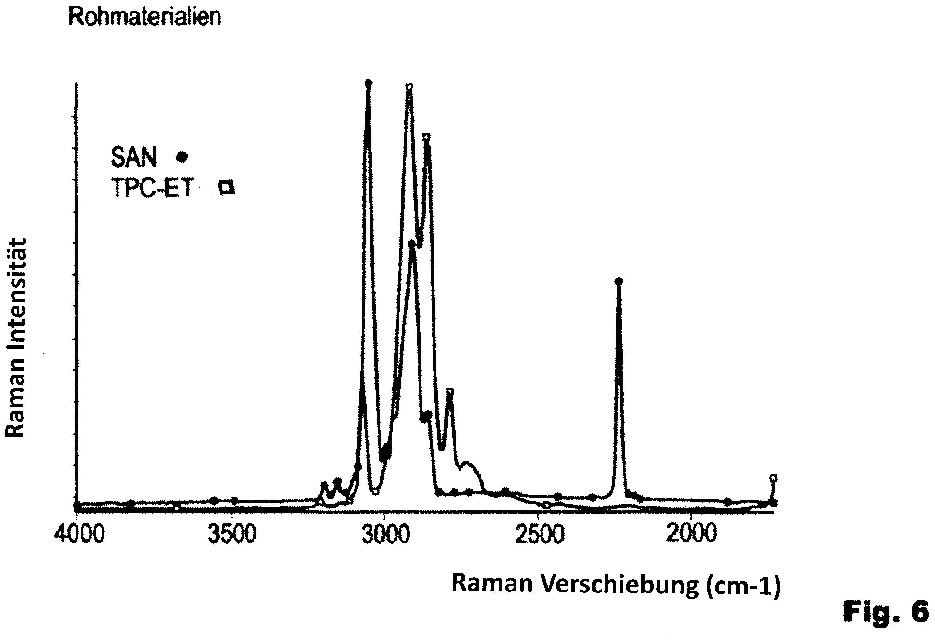

Die Figur 6 zeigt das jeweilige RAMAN-Spektrum für SAN und TPC-ET.

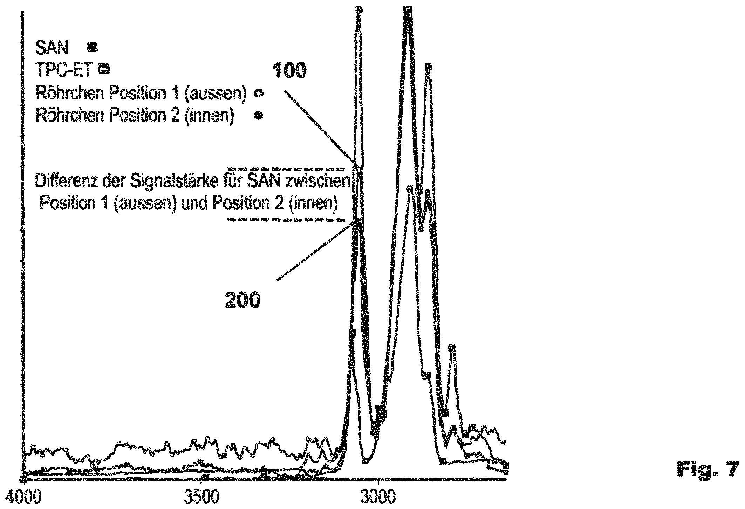

Die Figur 7 zeigt die RAMAN-Spektren für SAN und TPC-ET für die Reinstoffe und an zwei verschiedenen Messpunkten 100 und 200 an der Schnittfläche der Hülse.
Eine Figur 8 ist nicht vorgesehen.

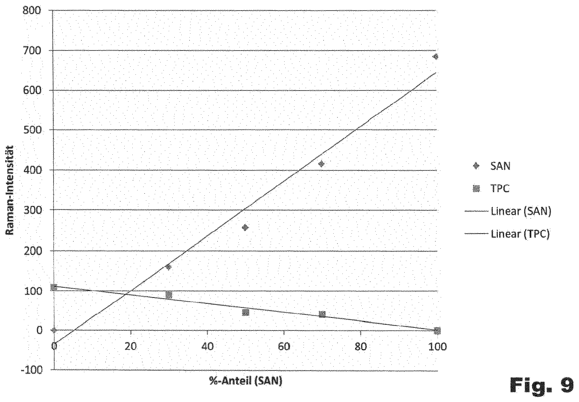

Die Figur 9 zeigt die RAMAN-Intensität der Spektren, die für Proben aufgenommen sind, die 0 Gew.-% SAN, 30 Gew.-% SAN, 50 Gew.-% SAN, 70 Gew.-% SAN und 100 Gew.-% SAN und den komplementären Anteil an TPE-ET enthielten.

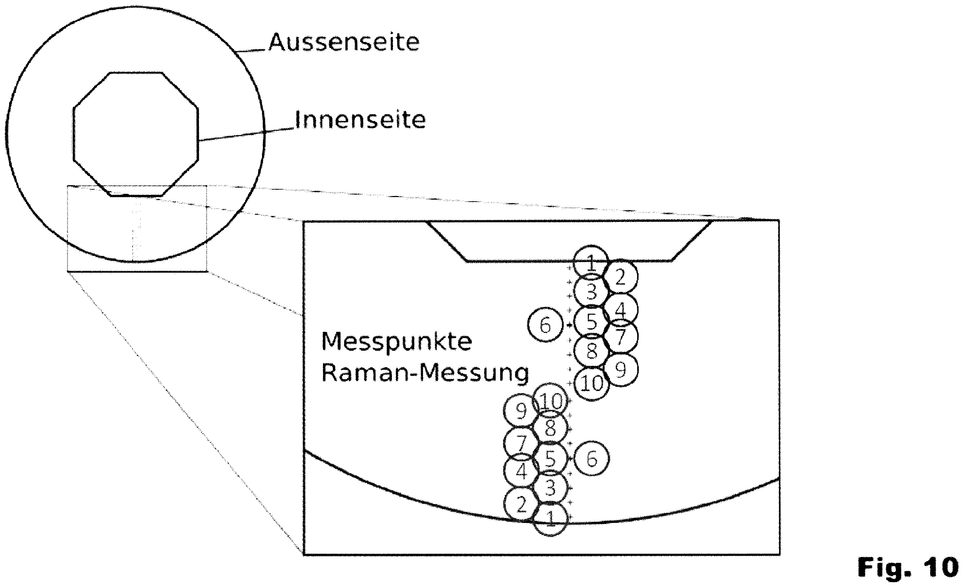

Die Figur 10 veranschaulicht, in welchen Schritten die Schnittfläche der Hülse, die gemäß des 1. Ausführungsbeispiels gefertigt wurde, mit der RAMAN-Spektroskopie vermessen wurde.

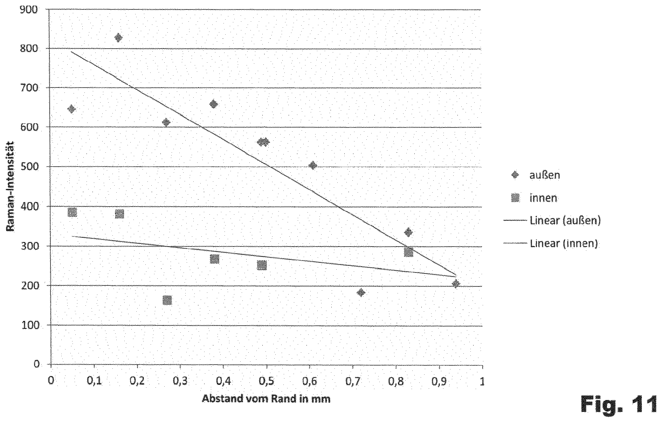

Die Figur 11 zeigt, wie sich die Konzentration aus SAN und TPC-ET in radialer Richtung über den Querschnitt der Hülse hinweg verändert.

### BEISPIELE

### Erste Probe

Die erste Probe demonstriert das grundlegende Prinzip. Für ein erstes, wegen der eingangs vorgegebenen Definition nicht erfindungsgemäßes und nicht vorbekanntes Beispiel werden 60 Gew.-% SAN (LURAN 378P^{™}) und 40 Gew.-% TPC-ET (Arnitel EM400^{™}) unter Zugabe von 3% Pigmenten (vorzugsweise Schwarzpigmenten des markgängigen Typs Carbon Black CI 77266, der bei unterschiedlichen Firmen erhältlich ist) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt. Hierzu kann ein Extruder der Fa. Leistritz, 90459 Nürnberg / Deutschland. dienen.

Der eigentliche Spritzgussvorgang kann auf einer Spritzgussmaschine des Typs E-motion 940/160T der Firma Engel, 90451 Nürnberg / Deutschland durchgeführt werden. Die vorbereitete Masse wird mit einem Einspritzdruck von ca. 1400 bar in die Formkavität der Spritzgussform eingeschossen. Die Spritzgussform wird dabei durch ein flüssiges Medium gekühlt, das die Spritzgussform - abgedichtet gegenüber der Formkavität - durchströmt. Insbesondere wird auch der Kernstift der Spritzgussform, der den zur späteren Aufnahme der Mine vorgesehenen Hohlraum in der Hülse abbildet, selbst unmittelbar von dem flüssigen Medium gekühlt. Das heißt, dass der Kernstift selbst von dem Kühlmedium durchflossen wird.

Anschließend wird entformt, vorzugsweise indem der Kernstift zusammen mit der Hülse aus der Formkavität herausgezogen wird und dann die Hülse von dem Kernstift abgeschoben wird.

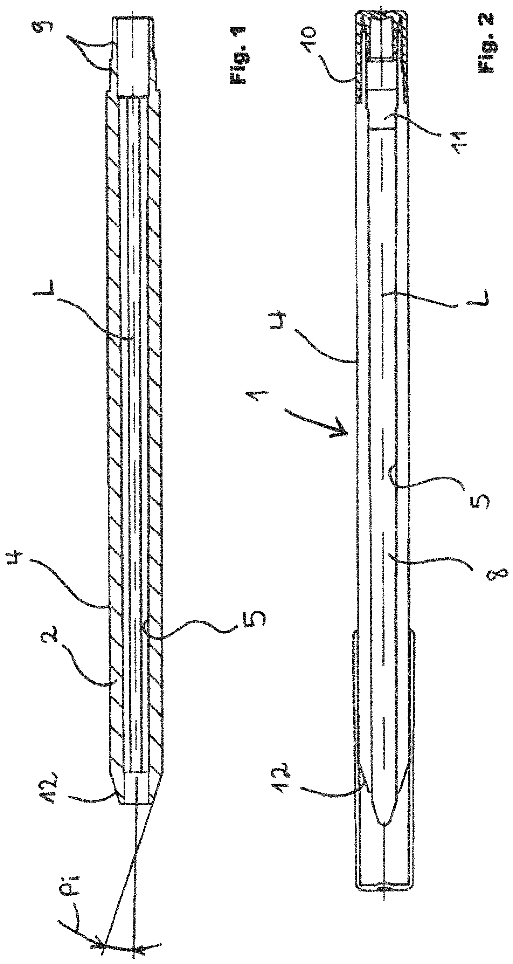

Die so hergestellte Hülse 2 sieht besonders bevorzugt so aus, wie das die Fig. 1 veranschaulicht, wobei auf die konstruktiven Einzelheiten der Hülse 2 später noch näher einzugehen ist.

Die so hergestellte Hülse zeigt eine ausgesprochen kratzfeste Außenumfangsoberfläche mit klavierlackartigem Glanz. Sie ist sehr widerstandsfähig gegen die Migration der Minenbestandteile und gut dekorierbar.

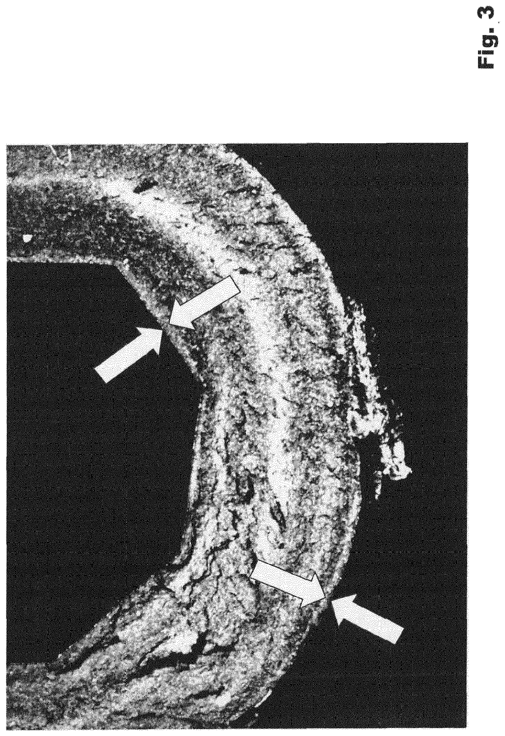

Um einen Querschnitt zu bekommen, der einer Untersuchung per Augenschein zugänglich ist, wurde die Hülse 2 gemäß Fig. 1 in eine Zerreißmaschine eingespannt und durch entsprechend große Zugkräfte in Richtung ihrer Längsachse L in zwei Hälften auseinandergerissen. Eine Ausschnittvergrößerung der hierdurch entstandenen, einer durch ein Mikroskop unterstützten optischen Erstbegutachtung zugänglichen Bruchfläche des Querschnitts 3, zeigt die Fig. 3.

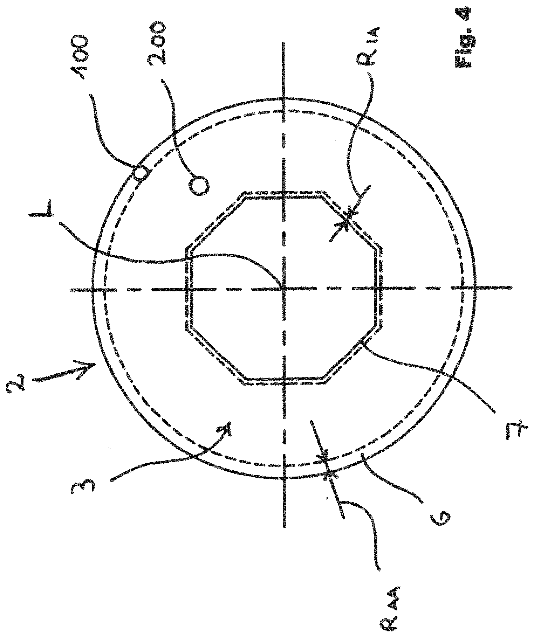

Schon anhand der Fig. 3 lässt sich erkennen, dass es an und direkt unter der Oberfläche des Innenumfangs 5 und des Außenumfangs 4 zur Ausbildung einer andersartigen Schicht gekommen ist. Dieser Befund wurde durch Messungen unter Einsatz der RAMAN-Spektroskopie verifiziert, wie nachfolgend noch näher erläutert. Hieraus ergibt sich das, was anhand der Figur 4 dargestellt ist.

Wie man sieht, lässt sich die eine Außenanreicherungszone 6 und eine Innenanreicherungszone 7 feststellen. Die Ausprägung der Außenanreicherungszone 6 und der Innenanreicherungszone 7 lässt sich über die Temperatur der innerhalb der Formkavität abbildenden Oberfläche beeinflussen. Je kälter die entsprechende Oberfläche der Formkavität zu Beginn des Einspritzens ist, desto stärker prägt sich die Entmischung aus. Das gilt auch für die Innenanreicherungszone 7. Wie bereits oben erwähnt, ist die Temperatur des die Innenanreicherungszone abbildenden Kernstifts dadurch steuerbar, dass der Kernstift selbst mehr oder minder intensiv vom Kühlmittel durchflossen wird.

Im vorliegenden Fall ist es so, dass sich auf der freien Oberfläche der Außenanreicherungszone mit der RAMAN-Spektroskopie im Rahmen der Messgenauigkeit kein Anteil der zweiten Kunststoffphase nachweisen lässt. Das ist nicht nur im Rahmen dieses Ausführungsbeispiels gewünscht, sondern generell bevorzugt. Denn eine solche Ausbildung ist günstig für das Erreichen der hier gewünschten, nach Art einer Pianolack-Oberfläche, glänzenden Oberfläche. In radial einwärtiger Richtung unterhalb der freien Oberfläche beginnt der Anteil der ersten Kunststoffphase abzunehmen. Bis in eine Tiefe von etwa 0,2 mm liegt aber ein Anteil der ersten Kunststoffphase von mehr als 90 Gew.-% vor.

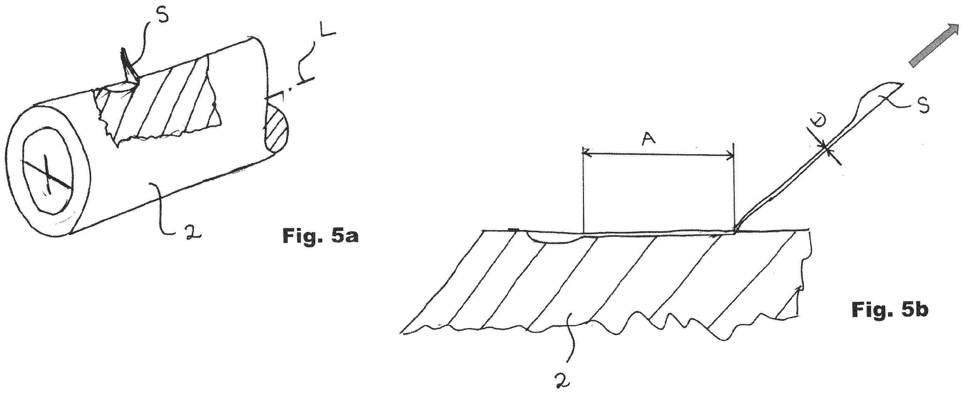

Interessant ist, dass es jedenfalls im Bereich der Außenanreicherungszone eine definierte Grenzschicht zu geben scheint, ab der die Festigkeit der die Wand der Hülse bildenden Kunststoffphase signifikant abnimmt. Schneidet man eine, nach Maßgabe dieses ersten Vergleichsbeispiels hergestellte Hülse schräg mit einer Klinge an, so dass ein schräg abstehender Span entsteht, wie das die Fig. 5 illustriert, dann kann man mit bloßer Hand durch Ziehen an dem Span, unabhängig von der Einschnitttiefe, eine Haut von der Oberfläche der Hülse abziehen. Die Haut ist relativ fest und reißt in den meisten Fällen erst nach 4 cm Abzugslänge und mehr ab.

Generell, mit Wirkung über dieses Ausführungsbeispiel hinaus, lässt sich sagen, dass derartige Hautabzugstests ergeben haben, dass eine besonders gute Anspitzbarkeit immer dann gegeben ist, wenn sich solche Häute mit einer Dicke von 0,08 mm bis 0,25 mm abziehen lassen.

Soweit bislang erklärlich, scheint es so zu sein, dass die Spitzerklinge dann nicht darauf angewiesen ist die relativ feste Haut komplett zerschneiden zu müssen, sondern es scheint zu einer Mischung aus Schnitt und Abriss zu kommen, was sich erleichternd auswirkt.

### Zweite Probe

Zur Herstellung des zweiten, wegen der eingangs gegebenen Definition nicht erfindungsgemäßen und nicht vorbekannten Beispiels werden 60 Gew.-% AES (ROTEC A702^{™}) und 40 Gew.-% TPC-ET (Arnitel EM400^{™}) unter Zugabe von 3% Pigmenten (vorzugsweise Schwarzpigmenten des o. g. Typs) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt.

Die Verarbeitung dieser Masse erfolgt, wie oben für das erste Ausführungsbeispiel beschrieben, mit Hilfe der dort beschriebenen Maschinen, ebenfalls im Wege des Spritzgusses.

Die so hergestellte Hülse 2 sieht besonders bevorzugt so aus, wie das die Fig. 1 veranschaulicht.

Die so hergestellte Hülse zeigt eine ausgesprochen kratzfeste Außenumfangsoberfläche mit seidenmattem Glanz. Sie ist widerstandsfähig gegen die Migration der Minenbestandteile und gut dekorierbar.

Die Untersuchungen mit Hilfe der RAMAN-Spektroskopie, wie sie nachfolgend näher erläutert wird, zeigen, dass sich auch beim Spritzgießen dieser Kunststoffmischung eine klar zu erkennende Außenanreicherungszone und eine ebenso klar zu erkennende Innenanreicherungszone einstellt, deren Erstreckung sich je nach Intensität der Kühlung der Spritzgussform innerhalb der oben beschriebenen Bereiche bewegt.

### Dritte Probe

Zur Herstellung des dritten Beispiels, das zugleich ein Ausführungsbeispiel der Erfindung ist, werden 60 Gew.-% einer Mischung aus 70 Gew.-% AES (ROTEC A702^{™})und 30 Gew.-% Polystyrol (STYROLOTION PS 416N^{™} der Firma INEOS Styrolution, Frankfurt, Deutschland) für die erste Kunststoffphase und 40 Gew.-% einer Mischung aus 90 Gew.-% TPC-ET (Arnitel EM400^{™}) und 10 Gew.-% TPE-A (Pebax^{®} 2533 SA 01 von der Fa. ARKEMA, Colombes, Frankreich)für die zweite Kunststoffphase unter Zugabe von 3% Pigmenten (vorzugsweise Schwarzpigmenten des o. g. Typs) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt.

Die Verarbeitung dieser Masse erfolgt, wie oben für das erste Ausführungsbeispiel beschrieben, mit Hilfe der dort beschriebenen Maschinen, ebenfalls im Wege des Spritzgusses.

Die so hergestellte Hülse zeigt eine prinzipielle Struktur, wie sie die Fig. 1 bzw. die Fig. 4 veranschaulicht.

Die so hergestellte Hülse zeigt eine ausgesprochen kratzfeste Außenumfangsoberfläche mit hoher Güte. Sie ist widerstandsfähig gegen die Migration der Minenbestandteile und gut dekorierbar.

Dieses Ausführungsbeispiel zeichnet sich im Bereich der Außenanreicherungszone durch eine Grenzschicht aus, ab der die Festigkeit der die Wand der Hülse bildenden Kunststoffphase signifikant abnimmt. Schneidet man eine, nach Maßgabe dieses Ausführungsbeispiels hergestellte Hülse schräg mit einer Klinge an, so dass ein schräg abstehender Span entsteht, wie das die Fig. 5 illustriert, dann kann man mit bloßer Hand durch Ziehen an dem Span, unabhängig von der Einschnitttiefe, eine Haut von der Oberfläche der Hülse abziehen. Die Haut ist relativ fest und reißt in den meisten Fällen erst nach 4 cm Abzugslänge und mehr ab. Interessant ist dabei, dass auch ein solcher Abzugstest an einem tieferen Schnitt, der bis in eine Region radial unterhalb der Haut hineinreicht, dazu führt dass die Dicke des abzuziehenden Spanes von allein abnimmt, bis bei weiterem Abziehen nur noch die Haut abgezogen wird. Die Fig. 5c zeigt ein Foto des Abzugstests bei diesem Ausführungsbeispiel. Hier ist gut zu erkennen, wie zuerst ein tieferer Einschnitt gesetzt wurde, der zunächst einen dicken Span beginnen ließ, der sich aber selbst auf kurzem Wege in seiner Dicke reduziert hat, solange bis (erkennbar durch die in Umfangsrichtung mit geradlinigen Rändern versehene, weitere Bahn) nur noch die Haut weiter abgezogen werden konnte, die man oben rechts in dem Bild liegen sieht.

Die Fig. 5c' zeigt das Gleiche wie die Fig. 5c, aber in zeichnerischer Darstellung anstatt als Fotografie und daher besser reproduzierbar. Die in etwa in Richtung der Längsachse L verlaufende Schraffierung verdeutlicht den tieferen Schnitt und den sich daran anschließenden Übergangsbereich, der noch bis in die Region radial unterhalb der Haut hineinreicht. Der Bereich, der ausschließlich eine ca. 45° zur Längsachse verlaufende Schrägschraffierung trägt, ist der Bereich direkt unterhalb der besagten Haut, der durch das Abziehen von nur der Haut freigelegt wird.

Nicht zuletzt Untersuchungen mit Hilfe der RAMAN-Spektroskopie, wie sie nachfolgend näher erläutert wird, können vorteilhaft sein um zu zeigen, dass sich auch beim Spritzgießen dieser Kunststoffmischung eine klar zu erkennende Außenanreicherungszone und eine ebenso klar zu erkennende Innenanreicherungszone einstellt, deren Erstreckung sich je nach Intensität der Kühlung der Spritzgussform innerhalb der oben beschriebenen Bereiche bewegt.

### Vierte Probe

Zur Herstellung der vierten Probe, bei der es sich um ein weiteres Ausführungsbeispiel der Erfindung handelt, werden 70 Gew.-% einer Mischung aus 70 Gew.-% SAN (LURAN 378P (INEOS Styrolution, Frankfurt, Deutschland))und 30 Gew.-% ABS (POLYLAC PA-727 (CHI MEI CORPORATION, Tainan, Taiwan)) für die erste Kunststoffphase und 30 Gew.-% einer Mischung aus 70 Gew.-% TPC-ET (Arnitel EM400^{™}) und 30 Gew.-% TPE-A Pebax^{®} 2533 SA 01 (ARKEMA, Colombes, Frankreich) für die zweite Kunststoffphase unter Zugabe von 3% Pigmenten (vorzugsweise Schwarzpigmenten des o. g. Typs) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt.

Die Verarbeitung dieser Masse erfolgt, wie oben für die erste Probe beschrieben, mit Hilfe der dort beschriebenen Maschinen, ebenfalls im Wege des Spritzgusses.

Die so hergestellte Hülse zeigt eine prinzipielle Struktur, wie sie die Fig. 1 bzw. die Fig. 4 veranschaulicht.

Die so hergestellte Hülse zeigt eine ausgesprochen kratzfeste Außenumfangsoberfläche mit hoher Güte. Sie ist widerstandsfähig gegen die Migration der Minenbestandteile und gut dekorierbar.

Dieses Ausführungsbeispiel zeichnet sich im Bereich der Außenanreicherungszone ebenfalls durch eine Grenzschicht aus, ab der die Festigkeit der die Wand der Hülse bildenden Kunststoffphase signifikant abnimmt. Schneidet man eine, nach Maßgabe dieses Ausführungsbeispiels hergestellte Hülse schräg mit einer Klinge an, so dass ein schräg abstehender Span entsteht, wie das die Fig. 5 illustriert, dann kann man mit bloßer Hand durch Ziehen an dem Span, unabhängig von der Einschnitttiefe, eine Haut von der Oberfläche der Hülse abziehen. Die Haut ist relativ fest und reißt in den meisten Fällen erst nach 4 cm Abzugslänge und mehr ab. Interessant ist dabei, dass auch ein solcher Abzugstest an einem tieferen Schnitt, der bis in eine Region radial unterhalb der Haut hineinreicht, dazu führt dass die Dicke des abzuziehenden Spanes von allein abnimmt bis bei weiterem Abziehen nur noch die Haut abgezogen wird. Die hier als Panoramabild aus zwei Einzelaufnahmen zusammengesetzte Fig. 5d zeigt ein Foto des Abzugstests bei diesem Ausführungsbeispiel. Das zuvor Gesagte gilt sinngemäß. Die Fig. 5d' zeigt das Gleiche wie die Fig. 5d, aber in zeichnerischer Darstellung anstatt als Fotografie und daher besser reproduzierbar. Die in etwa in Richtung der Längsachse L verlaufende Schraffierung verdeutlicht den tieferen Schnitt und den sich daran anschließenden Übergangsbereich, der noch bis in die Region radial unterhalb der Haut hineinreicht. Der Bereich, der ausschließlich eine ca. 45° zur Längsachse verlaufende Schrägschraffierung trägt, ist der Bereich direkt unterhalb der besagten Haut, der durch das Abziehen von nur der Haut freigelegt wird.

Nicht zuletzt Untersuchungen mit Hilfe der RAMAN-Spektroskopie, wie sie nachfolgend näher erläutert wird, können vorteilhaft sein, um zu zeigen, dass sich auch beim Spritzgießen dieser Kunststoffmischung eine klar zu erkennende Außenanreicherungszone und eine ebenso klar zu erkennende Innenanreicherungszone einstellt, deren Erstreckung sich je nach Intensität der Kühlung der Spritzgussform innerhalb der oben beschriebenen Bereiche bewegt.

### Fünfte Probe

Zur Herstellung der fünften Probe werden 70 Gew.-% einer Mischung aus 80 Gew.-% SAN (LURAN 378P (INEOS Styrolution, Frankfurt, Deutschland))und 20 Gew.-% AES (ROTEC A702^{™}) für erste Kunststoffphase und 30 Gew.-% einer Mischung aus 90 Gew.-% TPC-ET (Arnitel EM400^{™}) und 10 Gew.-% TPE-A (Pebax^{®} 2533 SA 01) für die zweite Kunststoffphase unter Zugabe von 3% Pigmenten (vorzugsweise Schwarzpigmenten des o. g. Typs) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt.

Die Verarbeitung dieser Masse erfolgt, wie oben für die erste Probe beschrieben, mit Hilfe der dort beschriebenen Maschinen, ebenfalls im Wege des Spritzgusses.

Die so hergestellte Hülse sieht prinzipell so aus, wie das die Fig. 1 bzw. die Fig. 4 veranschaulicht.

Die so hergestellte Hülse zeigt eine ausgesprochen kratzfeste Außenumfangsoberfläche mit hoher Güte. Sie ist widerstandsfähig gegen die Migration der Minenbestandteile und gut dekorierbar.

Dieses Ausführungsbeispiel zeichnet sich im Bereich der Außenanreicherungszone ebenfalls durch eine Grenzschicht aus, ab der die Festigkeit der die Wand der Hülse bildenden Kunststoffphase signifikant abnimmt. Schneidet man eine, nach Maßgabe dieses Ausführungsbeispiels hergestellte Hülse schräg mit einer Klinge an, so dass ein schräg abstehender Span entsteht, wie das die Fig. 5 illustriert, dann kann man mit bloßer Hand durch Ziehen an dem Span, unabhängig von der Einschnitttiefe, eine Haut von der Oberfläche der Hülse abziehen. Die Haut ist relativ fest und reißt in den meisten Fällen erst nach 4 cm Abzugslänge und mehr ab. Interessant ist dabei, dass auch ein solcher Abzugstest an einem tieferen Schnitt, der bis in eine Region radial unterhalb der Haut hineinreicht, dazu führt dass die Dicke des abzuziehenden Spanes von allein abnimmt bis bei weiterem Abziehen nur noch die Haut abgezogen wird. Die hier als Panoramabild aus zwei Einzelaufnahmen zusammengesetzte Fig. 5e zeigt ein Foto des Abzugstests bei diesem Ausführungsbeispiel. Das zuvor gesagte gilt sinngemäß.

Die Fig. 5e' zeigt das Gleiche wie die Fig. 5e, aber in zeichnerischer Darstellung anstatt als Fotografie und daher besser reproduzierbar. Die in etwa in Richtung der Längsachse L verlaufende Schraffierung verdeutlicht den tieferen Schnitt und den sich daran anschließenden Übergangsbereich, der noch bis in die Region radial unterhalb der Haut hineinreicht. Der Bereich, der ausschließlich eine ca. 45° zur Längsachse verlaufende Schrägschraffierung trägt, ist der Bereich direkt unterhalb der besagten Haut, der durch das Abziehen von nur der Haut freigelegt wird.

Nicht zuletzt Untersuchungen mit Hilfe der RAMAN-Spektroskopie, wie sie nachfolgend näher erläutert wird, können vorteilhaft sein, um zu zeigen, dass sich auch beim Spritzgießen dieser Kunststoffmischung eine klar zu erkennende Außenanreicherungszone und eine ebenso klar zu erkennende Innenanreicherungszone einstellt, deren Erstreckung sich je nach Intensität der Kühlung der Spritzgussform innerhalb der oben beschriebenen Bereiche bewegt.

### Vergleichsbeispiel

Für das Vergleichsbeispiel werden 60 Gew.-% SAN (LURAN 378P^{™}) und 40 Gew.-% eines regelmäßig unpolaren SBS-Block-Co-Polymers (ALLRUNA W55^{™}) unter Zugabe von 3% Pigmenten (vorzugsweise Schwarzpigmenten des o. g. Typs) auf eine Temperatur von bevorzugt 250° C +/- 10°C in den spritzgussfähigen, viskosen Zustand gebracht und dabei gleichmäßig vermischt. Weitere Füll- oder Hilfsstoffe werden nicht zugesetzt. ALLRUNA W55^{™} ist eine Handelsmarke der Firma ALLOD Werkstoff GmbH & Co. KG, 91593 Burgbernheim, Deutschland

Die Verarbeitung dieser Masse erfolgt, wie oben für das erste Ausführungsbeispiel beschrieben, mit Hilfe der dort beschriebenen Maschinen, ebenfalls im Wege des Spritzgusses.

Die so hergestellte Hülse 2 sieht besonders bevorzugt so aus, wie das die Fig. 1 veranschaulicht.

Die so hergestellte Hülse zeigt eine matte Außenoberfläche und weder eine signifikante Außenanreicherungszone noch eine Innenanreicherungszone. Stattdessen bleiben die Materialien bis zur Erstarrung im Wesentlichen homogen vermischt. Auch der Hautabziehtest kann nicht durchgeführt werden, denn die Hülse hat augenscheinlich eine homogene Festigkeit.

### Die RAMAN-Spektroskopie zur Konzentrationsbestimmung

Für die Bestimmung der insbesondere in der erfindungsgemäßen Außen- und Innenanreicherungszone anzutreffenden Konzentrationen ist die RAMAN-Spektroskopie eines der Mittel der Wahl, wie sie hier beispielhaft an Hand der oben beschriebenen ersten Probe näher erläutert wird.

Für die Durchführung einer RAMAN-Spektroskopie erwies sich die oben geschilderte Bruchfläche als schlecht geeignet. Stattdessen wurden die Untersuchungen an einem Querschnitt durchgeführt, der dadurch entstanden ist, dass die Hülse zunächst quer zu ihrer Längsachse durchgeschnitten bzw. durchgesägt wurde und dann der so zugänglich gewordene Querschnitt angeschliffen wurde.

Zur Klärung der örtlichen Mengenverhältnisse von SAN und TPC-ET wurden die RAMAN-Spektren über den Querschnitt der nach Maßgabe des ersten Ausführungsbeispiels hergestellten Hülse hinweg vermessen. Die Messung erfolgte mit einem RAMAN-Spektrometer aus der Almega-Serie der Firma Thermo Fisher Scientific, 168 Third Avenue, Waltham, MA USA 02451.

Um das Gerät zu kalibrieren und die einzelnen Teile des jeweiligen Spektrums zuordnen zu können, wurden zunächst die Rohmaterialien vermessen. D.h. es wurden zu 100 Gew.-% aus SAN und zu 100 Gew.-% aus TPC-ET bestehende Platten hergestellt. Solange ein Messpunkt vollständig auf der jeweiligen Platte zu liegen kommt und die Dicke der Platte 2/10 mm übersteigt, spielen die Abmessungen der Prüflinge keine Rolle. Beide Platten wurden für sich alleine einzeln vermessen.

Die so erhaltenen Spektren wurden in das Diagramm gemäß Figur 6 eingetragen. Die strichpunktierte Linie zeigt das für SAN aufgenommene Spektrum, die durchgezogene Volllinie zeigt das für TPE-ET aufgenommene Spektrum.

Für die SAN-Bestimmung ist die Fläche des Peaks herangezogen worden, der bei 3050 cm⁻¹ sein Maximum erreicht, die ebenfalls für das SAN charakteristische Fläche des Peaks, dessen Maximum bei 2250 cm-1 liegt, könnte ebenfalls herangezogen werden, sie liefert vergleichbare Werte und muss daher im Folgenden nicht separat berücksichtigt werden, sondern kann unbeachtet bleiben.

Dann wurden nacheinander die in Fig. 4 kenntlich gemachten Punkte 100 und 200 vermessen. Die beiden dabei aufgenommenen Spektren wurden übereinandergelegt, so, wie das die Fig. 7 und (als Ausschnittvergrößerung) Fig. 8 zeigen. Man kann hieran bereits erkennen, dass in den Punkten 100 und 200 unterschiedliche Konzentrationen von SAN und TPC-ET anzutreffen sind.

Sodann wurden zusätzlich zu den bereits erwähnten Proben mit 0 Gew.-% und 100 Gew.-% SAN systematisch unterschiedliche Mischungen aus SAN und TPC-ET hergestellt und durch geeignete Temperaturführung randschichtfrei zu den besagten Platten verarbeitet, nämlich Mischungen, die 30 Gew.-%., 50 Gew.-%, 70 Gew.-% SAN enthielten und den komplementären Anteil an TPC-ET. Die RAMAN-Intensität der Spektren, die für die einzelnen Vertreter dieser Probenreihe aufgenommen wurden, sind in das Diagramm eingetragen worden, das die Fig. 9 zeigt. An der Fig. 9 erkennt man, dass jedem Mischungsverhältnis eine charakteristische RAMAN-Intensität zuzuordnen ist und dass ein linearer Zusammenhang zwischen dem Gew.-%-Anteil des SAN, bzw. des TPC-ET und der jeweils hierfür zu messenden RAMAN-Intensität besteht.

Sodann wurde - wie bereits beschrieben - der angeschliffene Querschnitt der nach Maßgabe des ersten Ausführungsbeispiels hergestellten Hülse 2 Schritt für Schritt vermessen, so wie das die Fig. 10 veranschaulicht. Es wurde von der Außenseite her kommend in radialer Richtung fortschreitend Punkt an/neben Punkt bis zur Mitte des Hülsenquerschnitts gemessen und von der Innenseite her kommend in radialer Richtung fortschreitend Punkt für Punkt bis zur Mitte des Hülsenquerschnitt.

Diese Messungen ergeben das Diagramm, das die Fig. 10 zeigt. Die zum Spritzgießen eingesetzte Kunststoffmasse hatte ein Mischungsverhältnis von 2/3 SAN zu 1/3 TPC-ET. Hiervon ausgehend kann man unter Berücksichtigung der Streuung der Messergebnisse sehen, dass es während des Spritzgussprozesses im Spritzgusswerkzeug zu einen partiellen Entmischung gekommen ist.

Dabei liegt die Konzentration an SAN an der Oberfläche der Außenumfangsfläche der Hülse bei ca. 100 Gew.-%.

An der Oberfläche der Innenumfangsfläche liegt die Konzentration an SAN nur bei ca. 70 Gew.-%.

Zur Bestimmung der Kunststoffphasen und ihrer Mengenanteile in den anderen oben geschilderten Proben wird entsprechend verfahren.

### Die konstruktive Ausgestaltung des erfindungsgemäßen Stifts

Der erfindungsgemäße Stift 1 ist so ausgestaltet, wie das die Figuren 2, 3 und 4 zeigen. Er besitzt im Regelfall einen Außendurchmesser von ca. 6 bis 16 mm.

In seinem Zentrum besitzt er eine Aufnahme für die Mine 8, die vorteilhafterweise eine formschlüssige Verdrehsicherung bildet. Deren Querschnitt kann kreisrund sein, ist aber vorzugsweise oval, bzw. polygonal, bzw. 8-eckig ausgestaltet, um einen besseren Halt zwischen der Mine 8 und der Hülse 2 zu gewährleisten. Der Abstand zweier sich gegenüberliegender Flachseiten des Achtecks beträgt vorzugsweise zwischen 3 und 5 mm. Die Wandstärke der Hülse 2 liegt vorzugsweise im Bereich von 1,5 bis 3 mm. Die Länge des Stifts 1, d. h. seine Erstreckung in Richtung seiner Längsachse L, ist im Regelfall größer als 85 mm, meist größer als 100 mm, bis hin zu 180 mm.

Die Aufnahme für die Mine 8 erstreckt sich vorzugsweise durch die gesamte Hülse 2 in Richtung von deren Längsachse L hindurch, d.h. die Hülse 2 bildet als Halbzeug ein Rohr aus. Dies vereinfacht das Minengießen. Denn die Hülse kann auf der Seite, auf der sie den gleich noch näher beschriebenen Kegel ausbildet, zum Zwecke des Minengießens in eine sie dicht verschließende Form gesteckt werden, die dann gleich dem Ende der Mine im Bereich des Kegels eine ansprechende, im Regelfall ebenfalls kegelig zulaufende Form gibt. Die Minenmasse wird dann vom anderen Ende der Hülse, an der sich der Sitz befindet, eingegossen und füllt die Minenaufnahme in der Hülse 2 aus und den Form-Hohlraum, der die Spitze der Mine 8 abbildet. Eine aus Kunststoff bestehende Hülse, wie die erfindungsgemäße, lässt sich besonders gut in eine sie dicht verschließende Form zum Zwecke des Minengießen einstecken bzw. einspreizen, da der Kunststoff der Hülse, verglichen mit einer hölzernen Hülse, reversibel elastisch ist, also dichtend eine entsprechende Form eingesteckt bzw. eingespritzt werden kann. Die sehr glatte Außenoberfläche der Hülse trägt das Ihre dazu bei, um eine sichere Abdichtung zu erreichen.

Das eine Ende des Stifts 1 spitzt zu einem Kegel 12 zu, bevorzugt mit einem Kegelwinkel Pi zwischen 20° und 60°. Dieses Ende trägt auf diese Art und Weise dazu bei, die von einem normalen Holzstift bekannte, angespitzte Seite abzubilden und so eine Ansatzfläche zu bilden, die gleich beim ersten Anspitzen korrekt gegenüber der Spitzer-Klinge positioniert ist und es der Spitzer-Klinge ermöglicht, auf ganzer Länge einen Span abzunehmen.

Das andere Ende des Stifts 1 weist vorzugsweise einen Sitz 9 in Gestalt eines an seinem Außendurchmesser eingezogenen Bereichs auf. Auf diesen Sitz kann eine Abschlusskappe 10 aufgesteckt werden, vorzugsweise kommt es zu einem Verrasten zwischen dem Sitz 9 und der Abschlusskappe 10. Um die Mine so gut wie möglich zu konservieren und Migrationen zu vermeiden, wird unter der Kappe im Regelfall eine zusätzliche Dichtung vorgesehen, oft in Gestalt eines Stopfens oder Silikon-Stopfens 11. Der fertige Stift 1 wird auf der Seite, auf der die Mine 8 über die Hülse 2 hinaussteht, im Regelfall mithilfe einer aufgesetzten Kappe 12 frisch gehalten. Die erfindungsgemäß erreichte, sehr glatte und kratzfeste Außenoberfläche leistet dem guten und sicheren Aufstecken der Kappe 10 Vorschub. Die erfindungsgemäß erreichte Oberfläche ist so kratzfest, dass sich auch nach 30-maligem Abziehen und Wiederaufstecken der Kappe 10 keine mit bloßem Auge erkennbare Abstumpfung der von der Kappe 10 überfahrenen Oberfläche ergibt, durch in Richtung der Längsachse des Stiftes verlaufende Mikrokratzer und ähnliches. Die Kappe 10 wird mit etwas Untermaß ausgeführt, also einem etwas kleineren Innendurchmesser, verglichen mit dem Außendurchmesser der Hülse 2. Die so gefertigte Kappe 10 lässt sich auf die erfindungsgemäß erreichte Oberfläche der Hülse 2 saugend aufstecken und aufgrund von deren glatter Beschaffenheit auch von dort wieder abziehen (kein Stick/Slip).

### Abschlussbemerkungen allgemeiner Natur

Unabhängiger Schutz, ggf. auch mit weiteren Merkmalen aus der vorgenannten Beschreibung und/oder den bereits existierenden Ansprüchen angereichert, wird für einen Stift zum Auftragen einer Farb- und/oder Kosmetiksubstanz beansprucht, mit einer Mine aus der aufzutragenden Substanz und einer die Mine ummantelnden, einstückig spritzgegossenen Hülse aus einem thermoplastischen Material, das aus einer Mischung aus eine ersten und einer zweiten Kunststoffphase besteht, und das sich dadurch auszeichnet, dass nach Einschneiden der Außenumfangsoberfläche derart, dass ein Span von der Außenumfangsfläche absteht, mit bloßer Hand durch Ziehen an dem Span eine Haut von der Oberfläche der Hülse abgezogen werden kann.

Unabhängiger Schutz, ggf. auch mit weiteren Merkmalen aus der vorgenannten Beschreibung und/oder den bereits existierenden Ansprüchen angereichert, wird für einen Stift zum Auftragen einer Farb- und/oder Kosmetiksubstanz beansprucht, mit einer Mine aus der aufzutragenden Substanz und einer die Mine ummantelnden, einstückig spritzgegossenen Hülse aus einem thermoplastischen Material, das aus einer Mischung aus einer ersten und einer zweiten Kunststoffphase besteht, wobei der Stift sich dadurch auszeichnet, dass seine Hülse einen Aufbau aus zwei, von Hand voneinander trennbaren Schichten besitzt, wobei vorzugsweise die oberflächennahe dieser beiden Schichten dünner ist.

Unabhängiger Schutz, ggf. auch mit weiteren Merkmalen aus der vorgenannten Beschreibung angereichert, wird für einen Stift zum Auftragen einer Farb- und/oder Kosmetiksubstanz, mit einer Mine aus der aufzutragenden Substanz und einer die Mine ummantelnden, einstückig spritzgegossenen Hülse aus einem thermoplastischen Material, das aus einer Mischung aus einer ersten und einer zweiten Kunststoffphase besteht und der sich dadurch auszeichnet, dass seine Hülse, in radialer Richtung gesehen, eine Außenanreicherungszone mit höherer Konzentration der ersten Kunststoffphase aufweist, als im Mittenbereich.

Hierzu sei angemerkt, dass sich die Ausbildung einer Innenanreicherungszone ggf. durch eine entsprechende Temperaturführung am Innenumfang der Hülse erreichen lässt. Dort wo dieser Anspruch in Kraft tritt, gelten die obigen Ausführungen sinngemäß, lediglich besondere Beschränkungen, die in der (bei dieser Variante nicht vorhandenen, bzw. rein optionalen) Innenanreicherungszone begründet sind, entfallen.

Unabhängiger Schutz, ggf. auch mit weiteren Merkmalen aus der vorgenannten Beschreibung und/oder den bereits existierenden Ansprüchen angereichert, wird für einen Stift zum Auftragen einer Farb- und/oder Kosmetiksubstanz, mit einer Mine aus der aufzutragenden Substanz und einer die Mine ummantelnden, einstückig spritzgegossenen Hülse aus einem thermoplastischen Material, das aus einer Mischung aus einer ersten und einer zweiten Kunststoffphase besteht und der sich dadurch auszeichnet, dass seine Hülse, in radialer Richtung gesehen, eine Innenanreicherungszone mit einer höheren Konzentration der ersten Kunststoffphase aufweist, als im Mittenbereich.

Hierzu sei angemerkt, dass sich die Ausbildung einer Außenanreicherungszone ggf. durch eine entsprechende Temperaturführung am Außenumfang der Hülse erreichen lässt, die nach dem Einspritzen in die Kavität nicht mehr erforderliche Wärmenergie wird der Kunststoffmasse der Hülse dann im Wesentlichen über ihre Innenumfangsfläche entzogen. Dort wo dieser Anspruch in Kraft tritt, gelten die obigen Ausführungen sinngemäß, lediglich besondere Beschränkungen, die in der (bei dieser Variante nicht vorhandenen bzw. rein optionalen) Außenanreicherungszone begründet sind, entfallen.

Weitere Ausprägungen der Erfindung des erfindungsgemäßen bzw. anspruchsgemäßen Stifts und das zu seiner Herstellung vorgesehenen Verfahrens kommen hinzu, wie folgt.

Der Stift kann sich erfindungsgemäß hervorheben indem das die Hülse bildende Werkstoffsystem so eingestellt ist, dass die erste Kunststoffphase einen Gewichtsanteil von mindestens 45 Gew.-%, besser mindestens 55 Gew.-%, aufweist.

Der Stift kann sich erfindungsgemäß hervorheben indem die Obergrenze für die erste Kunststoffphase in der zum Einspritzen bereiten Mischung bei 85 Gew.-%, besser bei 70 Gew.-%, liegt. Der Stift kann sich erfindungsgemäß hervorheben indem die Hülse an der Außenumfangsoberfläche einen arithmetisch gemittelten Glanzgrad GU von mehr als 30 GU, besser mehr als 40 GU, aufweist.

Der Stift kann sich erfindungsgemäß hervorheben indem die Hülse einen Aufbau aus zwei, voneinander trennbaren Schichten besitzt, wobei vorzugsweise die oberflächennahe dieser beiden Schichten dünner ist.

Der Stift kann sich erfindungsgemäß hervorheben indem die Kunststoffhülse aus ungeschäumtem Kunststoffmaterial besteht.

Der Stift kann sich erfindungsgemäß hervorheben indem die Hülse als ein an beiden Stirnseiten offenes Rohr gestaltet ist.

Der Stift kann sich erfindungsgemäß hervorheben indem sich die Hülse an einem Stirnende kegelförmig verjüngt, vorzugsweise mit einem Kegelwinkel (Pi) von 25° bis 35° zur Längsachse L der Hülse.

Der Stift kann sich erfindungsgemäß hervorheben indem die Hülse an einem Stirnende einen Absatz mit einem reduzierten Durchmesser aufweist.

Der Stift kann sich erfindungsgemäß hervorheben indem am Stiftende und vorzugsweise auf dem Absatz eine Endkappe befestigt ist, die ein Ende der Hülse verschließt.

Der Stift kann sich erfindungsgemäß hervorheben indem die fertig gespritzte Hülse in Richtung ihrer Längsachse aus der Form ausgeworfen wird.

Der Stift kann sich erfindungsgemäß hervorheben indem die Minenaufnahme im Zentrum der Hülse durch einen Formkern bildenden Stift abgebildet wird, mit dem zusammen die Hülse beim Auswerfen der Hülse aus der Spritzgussform zurückgezogen wird.

Der Stift kann sich erfindungsgemäß hervorheben indem die die Außenumfangsfläche abbildende Oberfläche der Spritzgussform eine Rautiefe Rz ≤ 5 µm aufweist.

Der Stift kann sich erfindungsgemäß hervorheben indem die Mine dadurch gegossen wird, dass die Hülse in eine Form gesteckt wird, die die Hülse an ihrem sich verjüngenden Ende abdichtet und die spätere Form der unbenutzten Minenspitze abbildet und in die die Mine bildende Masse am anderen Ende der Hülse eingefüllt wird.

### BEZUGSZEICHENLISTE

- 1: Stift
- 2: Hülse
- 3: Querschnitt der Hülse
- 4: Außenumfang
- 5: Innenumfang
- 6: Außenanreicherungszone
- 7: Innenanreicherungszone
- 8: Mine
- 9: Sitz
- 10: Abschlusskappe
- 11: Silikon-Stopfen
- 12: Kegel

- 100: Messpunkt 1
- 200: Messpunkt 2

- L: Längsachse des Stifts und seiner Hülse
- S: Span
- D: Dicke der Haut
- A: Abzugslänge
- Pi: Kegelwinkel

## Patentansprüche

1. Stift zum Auftragen einer Farb- und/oder Kosmetiksubstanz, mit einer Mine (8) aus der aufzutragenden Substanz und einer die Mine (8) ummantelnden, einstückig spritzgegossenen Hülse (2) aus einem thermoplastischen Material, das aus einer Mischung aus einer ersten und einer zweiten Kunststoffphase besteht, **dadurch gekennzeichnet, dass** die Hülse (2), jeweils in radialer Richtung gesehen, eine Außenanreicherungszone (6) mit einer höheren Konzentration aus der ersten Kunststoffphase aufweist, als im Mittenbereich und dass die Hülse (2), jeweils in radialer Richtung gesehen, eine Innenanreicherungszone (7) mit einer höheren Konzentration aus der ersten Kunststoffphase aufweist, als im Mittenbereich.

2. Stift nach Anspruch 1, **dadurch gekennzeichnet, dass** nach Einschneiden der Außenumfangsoberfläche derart, dass ein Span (S) von der Außenumfangsfläche absteht, mit bloßer Hand durch Ziehen an dem Span (S) eine Haut von der Oberfläche der Hülse (2) abgezogen werden kann.

3. Stift nach Anspruch 1 oder 2 , **dadurch gekennzeichnet, dass** die Konzentration der ersten Kunststoffphase von der Außenanreicherungszone (6) und von der Innenanreicherungszone (7) zur Mitte hin kontinuierlich abnimmt.

4. Stift nach einem der vorhergehenden Ansprüche, **dadurch gekennzeichnet, dass** die Kunststoffhülse über mindestens 80%, besser mindestens 90%, ihrer Querschnittsfläche hinweg sowohl aus der ersten und der zweiten Kunststoffphase gebildet wird, wobei die beiden Kunststoffphasen in lokal unterschiedlichen Gew.-Anteilen anzutreffen sind.

5. Stift gemäß einem der vorhergehenden Ansprüche, **dadurch gekennzeichnet, dass** die Hülse (2) überwiegend, zumindest zu 85 Gew.-%, oder vorzugsweise ausschließlich, aus der ersten und der zweiten Kunststoffphase besteht, zzgl. eventueller Füll- und Hilfsstoffe.

6. Stift nach einem der vorhergehenden Ansprüche, **dadurch gekennzeichnet, dass** jeweils eine erste und eine zweite Kunststoffphase im Stift (1) kombiniert werden, die sich in ihrer Polarität unterscheiden und entweder schwach polar mit einer Elektronennegativitätsdifferenz ΔEN im Bereich zwischen 0,3 ≤ ΔEN ≤ 0,5 oder stark polar mit einer Elektronennegativitätsdifferenz ΔEN im Bereich zwischen 0,5 < ΔEN ≤ 1,7 sind.

7. Stift gemäß einem der vorhergehenden Ansprüche, **dadurch gekennzeichnet, dass** die erste Kunststoffphase mindestens einen schwach polaren Kunststoff mit einer Elektronennegativitätsdifferenz ΔEN im Bereich zwischen 0,3 ≤ ΔEN und ≤ 0,5 umfasst.

8. Stift gemäß einem der vorhergehenden Ansprüche, **dadurch gekennzeichnet, dass** die erste Kunststoffphase mindestens einen stark polaren Kunststoff mit einer Elektronennegativitätsdifferenz ΔEN im Bereich zwischen 0,5 < ΔEN und ≤ 1,7 umfasst.

9. Stift gemäß einem der vorhergehenden Ansprüche, **dadurch gekennzeichnet, dass** die zweite Kunststoffphase mindestens einen stark polaren Kunststoff mit einer Elektronennegativitätsdifferenz ΔEN im Bereich zwischen 0,5 < ΔEN ≤ 1,7 umfasst.

10. Stift gemäß einem der vorhergehenden Ansprüche, **dadurch gekennzeichnet, dass** die zweite Kunststoffphase mindestens einen schwach polaren Kunststoff mit einer Elektronennegativitätsdifferenz ΔEN im Bereich zwischen 0,3 ≤ ΔEN ≤ 0,5 umfasst.

11. Stift gemäß einem der vorhergehenden Ansprüche, **dadurch gekennzeichnet, dass** die erste Kunststoffphase ein AES oder bevorzugt ein SAN umfasst.

12. Stift nach einem der vorhergehenden Ansprüche, **dadurch gekennzeichnet, dass** die zweite Kunststoffphase ein TPE oder bevorzugt ein TPC-ET umfasst.

13. Stift gemäß einem der vorhergehenden Ansprüche **dadurch gekennzeichnet, dass** die erste Kunststoffphase ein stark polares Strukturpolymer, bevorzugt ein PET, PCT oder PBT oder PMMA umfasst und / oder **dadurch, dass** die zweite Kunststoffphase ein schwach polares TPE oder bevorzugt ein TPV oder TPO umfasst.

14. Verfahren zum Herstellen eines Stifts (1) mit einer Hülse (2) nach einem der vorhergehenden Ansprüche,
- wobei eine plastifizierte, spritzgießfähige Masse aus einer ersten und einer zweiten vollständig miteinander vermischten Kunststoffphase hergestellt wird,
**dadurch gekennzeichnet,**
- **dass** die Kunststoffphasen so ausgewählt werden, dass sie ein derart unterschiedliches Erstarrungsverhalten aufweisen, dass sie sich beim Auf treffen auf eine gekühlte Formoberfläche entmischen,
- **dass** die Masse unter hohem Druck von mindestens 900 bar besser mindestens 1100 bar - vorzugsweise in axialer Richtung von einer Stirnseite der späteren Hülse (2) her - in eine die Hülse (2) des Stifts (1) abbildende Formkavität einer Spritzgussform eingespritzt wird,
- wobei die Spritzgussform derart intensiv gekühlt wird, dass unmittelbar an ihrer, die Formkavität bildenden Wandoberfläche auf ganzer Länge der Formkavität überwiegend die erste Kunststoffphase oder ein Kunststoff daraus erstarrt und sich dadurch an der Wandoberfläche anreichert,
- und **dass** anschließend die beiden Kunststoffphasen im darunter liegenden Bereich unter geringerer Entmischung als im Bereich der Wandoberfläche oder ohne Entmischung gemeinsam erstarren.

15. Verfahren nach Anspruch 14, **dadurch gekennzeichnet, dass** die Spritzgussform im Bereich der Außenumfangsfläche der Hülse (2) keine Abbildung eine Form-Trennfuge aufweist.

## Claims

1. A pencil for applying a coloring and/or cosmetic substance, comprising a pigment core (8) composed of the substance that is to be applied and a one-piece injection-molded casing (2) encompassing the pigment core (3) that is composed of a thermoplastic material that consists of a mix of a first plastic phase and a second plastic phase, **characterized in that** the casing (2), respectively viewed in the radial direction, has an outer enrichment zone (6) with a higher concentration of the first plastic phase than in the middle region, and that the casing (2), respectively viewed in the radial direction, has an inner enrichment zone (7) with a higher concentration of the first plastic phase than in the middle region.

2. The pencil of claim 1, **characterized in that** after an outer circumference surface is cut into in such a way that a shaving (S) protrudes from the outer circumference surface, it is possible to peel a skin off the surface of the casing (2) by pulling on the shaving (S) with the unaided hand.

3. The pencil of claim 1 or 2, **characterized in that** the concentration of the first plastic phase decreases continuously from the outer enrichment zone (6) and from the inner enrichment zone (7) toward the middle region.

4. The pencil according to one of the preceding claims, **characterized in that** over at least 80%, better at least 90%, of its cross-section area the plastic casing is composed of both the first and the second plastic phases, with the two plastic phases being encountered in percentages by weight that differ by location.

5. The pencil according to one of the preceding claims, **characterized in that** the casing (2) consists predominantly, at least at 85% by weight, or preferably exclusively of the first and second plastic phases, plus any fillers and auxiliary materials.

6. The pencil according to one of the preceding claims, **characterized in that** a first and a second plastic phase are each combined in the pencil (1), that differ in their polarity and are either weakly polar with an electronegativity difference ΔEN in the range between 0.3 ≤ ΔEN ≤ 0.5 or strongly polar with an electronegativity difference ΔEN in the range between 0.5 < ΔEN ≤ 1.7.

7. The pencil according to one of the preceding claims, **characterized in that** the first plastic phase comprises at least one weakly polar plastic with an electronegativity difference ΔEN in the range between 0.3 ≤ ΔEN and ≤ 0.5.

8. The pencil according to one of the preceding claims, **characterized in that** the first plastic phase comprises at least one strongly polar plastic with an electronegativity difference ΔEN in the range between 0.5 < ΔEN and ≤ 1.7.

9. The pencil according to one of the preceding claims, **characterized in that** the second plastic phase comprises at least one strongly polar plastic with an electronegativity difference ΔEN in the range between 0.5 < ΔEN ≤ 1.7.

10. The pencil according to one of the preceding claims, **characterized in that** the second plastic phase comprises at least one weakly polar plastic with an electronegativity difference ΔEN in the range between 0.3 ≤ ΔEN ≤ 0.5.

11. The pencil according to one of the preceding claims, **characterized in that** the first plastic phase comprises an AES or preferably a SAN.

12. The pencil according to one of the preceding claims, **characterized in that** the second plastic phase comprises a TPE or preferably a TPC-ET.

13. The pencil according to one of the preceding claims, **characterized in that** the first plastic phase comprises a strongly polar structural polymer, preferably a PET, PCT or PBT, or PMMA and/or **in that** the second plastic phase comprises a weakly polar TPE or preferably a TPV or TPO.

14. A method for producing a pencil (1) with a casing (2) according to one of the preceding claims:
- wherein a plasticized, injection-moldable compound is produced, composed of a first and a second plastic phase that are completely mixed with each other,
**characterized in**
- **that** the plastic phases are chosen so that they have solidification behaviors that differ from each other such that they separate when they come into contact with a cooled mold surface,
- **that** the compound is injected at a high pressure of at least 900 bar, better at least 1100 bar - preferably in the axial direction from one front of the subsequent casing (2) - into a mold cavity of an injection mold forming the casing (2) of the pencil (1),
- wherein the injection mold is intensively cooled such that directly against its wall surface that produces the mold cavity and over the entire length of the mold cavity, predominantly the first plastic phase or a plastic from it solidifies and is thus enriched against the wall surface,
- and then the two plastic phases in the region underneath solidify together with less separation than in the region of the wall surface or without any separation.

15. The method of claim 14, **characterized in that** in the region of the outer circumference surface of the casing, no mold parting line is formed by the injection mold.

## Revendications

1. Crayon servant à appliquer une substance colorante et/ou cosmétique, comportant une mine (8) composée de la substance à appliquer et une douille (2) moulée par injection en une seule pièce qui enrobe la mine (8) et qui est composée d'un matériel thermoplastique constitué d'un mélange d'une première phase de matière plastique et d'une seconde phase de matière plastique, **caractérisé en ce que** la douille (2), respectivement vue dans la direction radiale, a une zone d'enrichissement extérieure (6) avec une concentration plus élevée de la première phase de matière plastique que dans la région médiane, et **en ce que** la douille (2), respectivement vue dans la direction radiale, a une zone d'enrichissement intérieure (7) avec une concentration plus élevée de la première phase de matière plastique que dans la région médiane.

2. Le crayon selon la revendication 1, **caractérisé en ce qu'**après avoir coupé dans la surface de circonférence extérieure de telle sorte qu'un copeau (S) dépasse de la surface de circonférence extérieure, il est possible de détacher une peau de la surface de la douille (2) en tirant sur le copeau (S) à main nue.

3. Le crayon selon la revendication 1 ou 2, **caractérisé en ce que** la concentration de la première phase de matière plastique diminue continûment depuis la zone d'enrichissement extérieure (6) et depuis la zone d'enrichissement intérieure (7) vers la région médiane.

4. Le crayon selon l'une des revendications précédentes, **caractérisé en ce que,** sur au moins 80%, mieux au moins 90%, de sa surface de section transversale, la douille plastique est composée à la fois de la première et de la seconde phase de matière plastique, les deux phases de matière plastique étant présentes en pourcentages en poids qui diffèrent localement.

5. Le crayon selon l'une des revendications précédentes, **caractérisé en ce que** la douille (2) est constituée majoritairement, du moins à 85% en poids ou de préférence exclusivement de la première et de la seconde phase de matière plastique, plus d'éventuelles matières de remplissage et matières auxiliaires.

6. Le crayon selon l'une des revendications précédentes, **caractérisé en ce qu'**une première et une seconde phase de matière plastique sont combinées dans le crayon (1), ces deux phases de matière plastique se différant par leur polarité et étant soit faiblement polaires avec une différence d'électronégativité ΔEN comprise entre 0,3 ≤ ΔEN ≤ 0,5 ou fortement polaire avec une différence d'électronégativité ΔEN comprise entre 0,5 < ΔEN ≤ 1,7.

7. Le crayon selon l'une des revendications précédentes, **caractérisé en ce que** la première phase de matière plastique comprend au moins une matière plastique faiblement polaire avec une différence d'électronégativité ΔEN comprise entre 0,3 ≤ ΔEN et ≤ 0,5.

8. Le crayon selon l'une des revendications précédentes, **caractérisé en ce que** la première phase de matière plastique comprend au moins une matière plastique fortement polaire avec une différence d'électronégativité ΔEN comprise entre 0,5 < ΔEN et ≤ 1,7.

9. Le crayon selon l'une des revendications précédentes, **caractérisé en ce que** la seconde phase de matière plastique comprend au moins une matière plastique fortement polaire avec une différence d'électronégativité ΔEN comprise entre 0,5 < ΔEN et ≤ 1,7.

10. Le crayon selon l'une des revendications précédentes, **caractérisé en ce que** la seconde phase de matière plastique comprend au moins une matière plastique faiblement polaire avec une différence d'électronégativité ΔEN comprise entre 0,3 ≤ ΔEN et ≤ 0,5.

11. Le crayon selon l'une des revendications précédentes, **caractérisé en ce que** la première phase de matière plastique comprend un AES ou de préférence un SAN.

12. Le crayon selon l'une des revendications précédentes, **caractérisé en ce que** la seconde phase de matière plastique comprend un TPE ou de préférence un TPC-ET.

13. Le crayon selon l'une des revendications précédentes, **caractérisé en ce que** la première phase de matière plastique comprend un polymère structurel fortement polaire, de préférence un PET, PCT ou PBT ou PMMA et/ou **en ce que** la seconde phase de matière plastique comprend un TPE faiblement polaire ou de préférence un TPV ou TPO.

14. Procédé de fabrication d'un crayon (1) ayant une douille (2) selon l'une des revendications précédentes:
- une masse plastifiée et moulable par injection étant produite, composée d'une première et d'une seconde phase de matière plastique qui sont complètement mélangées l'une à l'autre,
**caractérisé en ce que**
- les phases de matière plastique sont choisies de telle sorte qu'elles présentent un comportement de solidification différent de sorte qu'elles se séparent lorsqu'elles entrent en contact avec une surface de moule refroidie,
- la masse est injectée à une pression élevée d'au moins 900 bars, mieux d'au moins 1100 bars, - de préférence dans le sens axial à partir d'un front de la douille (2) ultérieure - dans une cavité de moule d'un moule d'injection qui représente la douille (2) du crayon (1),
- le moule d'injection étant refroidi intensément de sorte que directement sur sa surface de paroi qui forme la cavité de moule et sur toute la longueur de la cavité de moule, principalement la première phase de matière plastique ou une matière plastique de celle-ci se solidifie et s'enrichit ainsi sur la surface de paroi,
- et qu'ensuite les deux phases de matière plastique dans la région inférieure se solidifient ensemble en se séparant plus faiblement que dans la région de la surface de paroi ou sans se séparer.

15. Procédé selon la revendication 14, **caractérisé en ce que** dans la région de la surface de circonférence extérieure de la douille (2), le moule d'injection ne reproduit pas une ligne de séparation de moule.
